(19) Europäisches Patentamt
European Patent Office
Office européen des brevets

(11) EP 1 195 386 B1

(12) EUROPEAN PATENT SPECIFICATION

(45) Date of publication and mention of the grant of the patent:
**20.06.2007 Bulletin 2007/25**

(21) Application number: **01912360.3**

(22) Date of filing: **14.03.2001**

(51) Int Cl.:
***C08F 4/645*** *(2006.01)* ***C08F 210/02*** *(2006.01)*
***C08F 212/08*** *(2006.01)* ***C08F 232/00*** *(2006.01)*

(86) International application number:
**PCT/JP2001/002020**

(87) International publication number:
**WO 2001/068719 (20.09.2001 Gazette 2001/38)**

# (54) TRANSITION METAL CATALYST COMPONENT FOR POLYMERIZATION AND PROCESS FOR PRODUCING POLYMER WITH THE SAME

ÜBERGANGSMETALLKATALYSATOR-KOMPONENTE FÜR DIE POLYMERISIERUNG UND VERFAHREN ZUR POLYMERHERSTELLUNG UNTER VERWENDUNG DESSELBEN

COMPOSANT CATALYSEUR A METAL DE TRANSITION POUR LA POLYMERISATION, ET PROCEDE DE PRODUCTION DE POLYMERE A L'AIDE DE CE COMPOSANT

(84) Designated Contracting States:
**DE FR GB IT**

(30) Priority: **14.03.2000 JP 2000069733**
**21.06.2000 JP 2000185662**

(43) Date of publication of application:
**10.04.2002 Bulletin 2002/15**

(73) Proprietor: **DENKI KAGAKU KOGYO KABUSHIKI KAISHA**
**Chiyoda-ku,**
**Tokyo 100-8455 (JP)**

(72) Inventors:
- **ARAI, Toru,**
**c/o Denki Kagaku Kogyo K. K.**
**Machida-shi,**
**Tokyo 194-8560 (JP)**
- **OTSU, Toshiaki,**
**c/o Denki Kagaku Kogyo K. K.**
**Machida-shi,**
**Tokyo 194-8560 (JP)**
- **NAKAJIMA, Masataka,**
**c/o Denki Kagaku Kogyo K. K.**
**Machida-shi,**
**Tokyo 194-8560 (JP)**

(74) Representative: **Wächtershäuser, Günter et al**
**Wächtershäuser & Hartz**
**Patentanwälte**
**Weinstrasse 8**
**80333 München (DE)**

(56) References cited:
**WO-A-00/20426**
**WO-A-00/20462**
**WO-A1-00/20426**
**WO-A1-97/15581**
**WO-A1-98/06759**

- **ARTHUR J. ASHE, III ET AL.: 'Aminoboranediyl-bridged zirconocenes: highly active olefin polymerization catalysts' ORGANOMETALLICS vol. 18, no. 12, 1999, pages 2288 - 2290, XP002940693**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### TECHNICAL FIELD

The present invention relates to a metal catalyst component for polymerization, a polymerization catalyst and a method for producing a polymer by means thereof.

### BACKGROUND ART

### Metallocene catalyst and method for producing an olefin type polymer

An olefin polymerization catalyst comprising a metallocene compound having two ligands having cyclopentadienyl ring structures, and a cocatalyst (a methylalumoxane or a boron compound), has been widely used as a catalyst for producing a polyolefin. Particularly, a polymerization catalyst comprising a metallocene compound having a structure wherein two ligands are bridged by carbon or silicon, is known as a catalyst for producing LLDPE or an isotactic or syndiotactic polypropylene.

However, with respect to a metallocene compound (catalyst) wherein the bridging structure is boron, little has been reported, and only complexes having cyclopentadienyl groups and indenyl groups, are known (WO97/15581, Organometallics 1999, 18, 2288, J. Organomet. Chem. 1997, 536-537, 361). In the case of these complexes, the activities for the production of LLDPE (linear low density polyethylene) or for the production of a polypropylene, are not so high.

### Method for producing an aromatic vinyl compound-olefin copolymer

Some styrene-ethylene copolymers obtainable by using so-called single-site catalyst systems comprising a transition metal compound and an organoaluminum compound, and methods for their production, have been known.

JP-A-3-163088 and JP-A-7-53618 disclose styrene-ethylene copolymers where no normal styrene chain is present i.e. so-called pseudo random copolymers, obtained by using a complex having a so-called constrained geometrical structure. Here, a normal styrene chain is meant for a head-to-tail bond chain. Further, hereinafter styrene may sometimes be represented by St.

However, phenyl groups in the alternating structure of styrene-ethylene present in such pseudo random copolymers, have no stereoregularity. Further, no normal styrene chain is present, whereby the content of styrene can not exceed 50 mol%. Further, the catalytic activities are practically inadequate.

JP-A-6-49132 and Polymer Preprints, Japan, 42, 2292 (1993) disclose methods for producing similar styrene-ethylene copolymers wherein no normal St chain is present, i.e. so-called pseudo random copolymers, by using a catalyst comprising a bridged metallocene type Zr complex and a cocatalyst.

However, according to Polymer Preprints, Japan, 42, 2292 (1993), phenyl groups in the alternating structure of styrene-ethylene present in such pseudo random copolymers, have no substantial stereoregularity. Further, like in the case of a complex having a constrained geometrical structure, no normal styrene chain is present, and the styrene content can not exceed 50 mol%. The catalytic activities are also practically inadequate.

Further, it has recently been reported to produce a styrene-ethylene copolymer close to an alternating copolymer having a stereoregularity under a condition of an extremely low temperature (-25°C) by using a specific bridged bisindenyl type Zr complex, i.e. rac[ethylenebis(indenyl)zirconium dichloride] (Macromol. Chem., Rapid Commun., 17, 745 (1996)).

However, from the 13C-NMR spectrum disclosed, it is evident that this copolymer has no normal styrene chain. Further, if copolymerization is carried out at a polymerization temperature of at least room temperature by using this complex, only a copolymer having a low styrene content and a low molecular weight is obtainable.

JP-A-9-309925 discloses a method for producing a styrene-ethylene copolymer employing a bridged zirconocene type catalyst having unsubstituted indenyl groups or substituted indenyl groups, wherein a boron bridging group having a substituent is disclosed. However, no specific disclosure is given relating to a specific boron-bridging complex. Further, JP-A-11-130808 discloses a method for producing a styrene-ethylene copolymer employing a bridged zirconocene type catalyst having benzindenyl type ligands, but there is no disclosure relating to a boron-bridging group.

The present invention is intended to provide a metal catalyst component for polymerization, and a method for producing an olefin (co)polymer and a method for producing an aromatic vinyl compound-olefin copolymer, by means thereof.

### DISCLOSURE OF THE INVENTION

The present inventors have found that a metal complex having specific ligands and a specific bridging group, exhibits a very high activity for (co)polymerization of an olefin or copolymerization of an aromatic vinyl compound-olefin

compound, and the molecular weight of the copolymer thereby obtainable is also high, and the invention has been completed.

Namely, the present invention is a transition metal catalyst component to be used for polymerization, represented by the following formula (1):

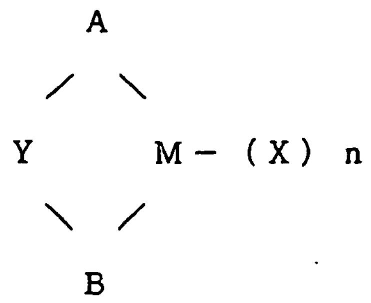

(1)

BEST MODE FOR CARRYING OUT THE INVENTION

In the formula (1), A is an unsubstituted or substituted benzindenyl group which can be represented by the following formula (5), (6) or (7):

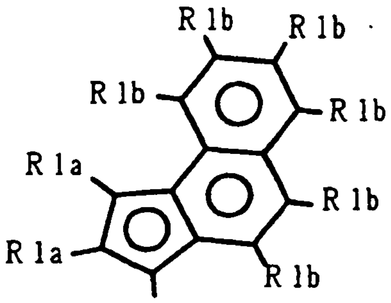

(5)

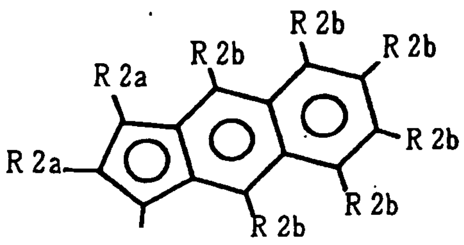

(6)

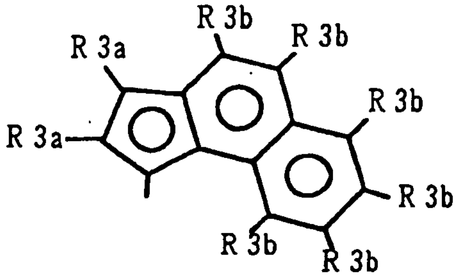

(7)

In the above formulae (5) to (7), each of R1a, R1b, R2a, R2b, R3a and R3b which are independent of each other, is hydrogen, a $C_{1-20}$ alkyl group, a $C_{6-10}$ aryl group or a $C_{7-20}$ alkylaryl group, they may contain from one to three

halogen atoms, silicon atoms, phosphorus atoms, oxygen atoms, boron atoms, nitrogen atoms, sulfur atoms and/or selenium atoms, they may have a structure of an $OSiR_3$ group, a $SiR_3$ group, an $NR_2$ group, an OH group, an OR group or a $PR_2$ group (each R represents a $C_{1-10}$ hydrocarbon group), such a plurality of R1a, a plurality of R1b, a plurality of R2a, a plurality of R2b, a plurality of R3a or a plurality of R3b, may be the same or different from one another, and adjacent such substituents may together form a single or plural 5- to 8-membered aromatic or aliphatic rings.

Especially, for the production of an aromatic vinyl compound-olefin copolymer, the respective R1a, R2a and R3a are preferably hydrogen. As such examples, the following groups may be mentioned.

As an unsubstituted benzindenyl group, 4,5-benz-1-indenyl (another name: benz[e]indenyl), 5,6-benz-1-indenyl or 6,7-benz-1-indenyl may, for example, be mentioned, and as a substituted benzindenyl group, α-acenaphtho-1-indenyl, 3-cyclopenta[c]phenanthryl or 1-cyclopenta[1]phenanthryl may, for example, be mentioned as a particularly preferred unsubstituted benzindenyl group, 4,5-benz-1-indenyl (another name: benz[e]indenyl) may, for example, be mentioned, and as such a substituted benzindenyl group, α-acenaphtho-1-indenyl, 3-cyclopenta[c]phenanthryl or 1-cyclopenta[1] phenanthryl may, for example, be mentioned.

Further, particularly for the production of an olefin polymer or an olefin copolymer, particularly preferably an ethylene-α-olefin copolymer, one of each R1a, R2a or R3a is preferably a $C_{1-20}$ alkyl group, a $C_{6-10}$ aryl group or a $C_{7-20}$ alkylaryl group. They may contain from one to three halogen atoms, silicon atoms, phosphorous atoms, oxygen atoms, boron atoms, nitrogen atoms, sulfur atoms or selenium atoms. They may have a structure of an $OSiR_3$ group, a $SiR_3$ group, an $NR_2$ group, an OH group, an OR group or a $PR_2$ group (each R represents a $C_{1-10}$ hydrocarbon group). Particularly preferably, one of each R1a, R2a or R3a is a $C_{1-4}$ alkyl group.

As such examples, a 2-methyl-4,5-benz-1-indenyl group, a 2-methyl-5,6-benz-1-indenyl group, a 2-methyl-6,7-benz-1-indenyl group, a 1-(2-methylcyclopenta[1]phenanthryl) group and a 3-(2-methylcyclopenta[c]phenanthryl) group may, for example, be mentioned.

In the above formula (1), B is the same unsubstituted or substituted benzindenyl group as the above A, or an unsubstituted or substituted indenyl group, an unsubstituted or substituted fluorenyl group, or an unsubstituted or substituted cyclopentadienyl group, which can be represented by the following formula (8), (9) or (10). When both A and B are unsubstituted or substituted benzindenyl groups, both may be the same or different.

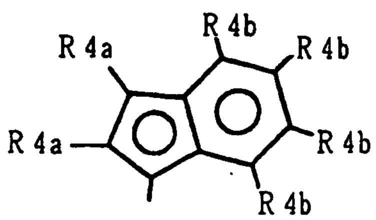

(8)

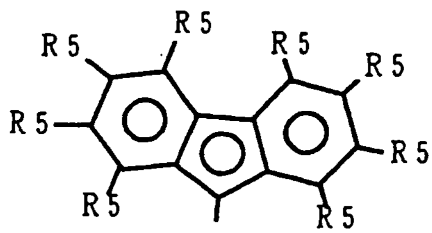

(9)

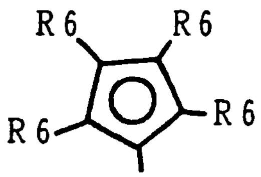

(10)

In the above formulae (8) to (10), each of R4a, R4b, R5 and R6 which are independent of each other, is hydrogen, a $C_{1-20}$ alkyl group, a $C_{6-10}$ aryl group or a $C_{7-20}$ alkylaryl group, they may contain from one to three halogen atoms, silicon atoms, phosphorus atoms, oxygen atoms, boron atoms, nitrogen atoms, sulfur atoms and/or selenium

atoms, they may have a structure of an $OSiR_3$ group, a $SiR_3$ group, an $NR_2$ group, an OH group, an OR group or a $PR_2$ group (each R represents a $C_{1-10}$ hydrocarbon group), and such a plurality of R4a, a plurality of R4b, a plurality of R5 or a plurality of R6, may be the same or different from one another. Further, particularly for the production of an aromatic vinyl compound-olefin copolymer, R4a is preferably hydrogen. Further, particularly for the production of an olefin polymer or an olefin copolymer, particularly preferably an ethylene-$\alpha$-olefin copolymer, one of R4a is preferably a $C_{1-20}$ alkyl group, a $C_{6-10}$ aryl group or a $C_{7-20}$ alkylaryl group. They may contain from one to three halogen atoms, silicon atoms, phosphorus atoms, oxygen atoms, boron atoms, nitrogen atoms, sulfur atoms or selenium atoms. They may have a structure of an $OSiR_3$ group, a $SiR_3$ group, an $NR_2$ group, an OH group, an OR group or a $PR_2$ group (each R represents a $C_{1-10}$ hydrocarbon group). Particularly preferably, one of R4a is a $C_{1-4}$ alkyl group.

However, B is preferably in a steric relation of a raceme (or a pseudoraceme) with A.

B is particularly preferably 4,5-benz-1-indenyl, as an unsubstituted benzindenyl group, or $\alpha$-acenaphtho-1-indenyl, 3-cyclopenta[c]phenanthryl or 1-cyclopenta[1]phenanthryl, as a substituted benzindenyl group.

The unsubstituted indenyl group may, for example, be 1-indenyl, and the substituted indenyl group may, for example, be 4-alkyl-1-indenyl, 4-aryl-1-indenyl, 4,5-dialkyl-1-indenyl, 4,6-dialkyl-1-indenyl, 5,6-dialkyl-1-indenyl, 4,5-diaryl-1-indenyl, 5-aryl-1-indenyl, 4-aryl-5-alkyl-1-indenyl, 2,6-dialkyl-4-aryl-1-indenyl, 5,6-diaryl-1-indenyl, or 4,5,6-triaryl-1-indenyl.

Preferably, the unsubstituted indenyl group may be 1-indenyl, and the substituted indenyl group may be a 4-phenyl-1-indenyl group, a 4-naphthyl-1-indenyl group, a 2-methyl-1-indenyl group or a 2-methyl-4-phenyl-1-indenyl group.

The unsubstituted fluorenyl group may be a 9-fluorenyl group, and the substituted fluorenyl group may, for example, be a 7-methyl-9-fluorenyl group.

The unsubstituted cyclopentadienyl group may be cyclopentadienyl, and the substituted cyclopentadienyl group may, for example, be 4-aryl-1-cyclopentadienyl, 4,5-diaryl-1-cyclopentadienyl, 5-alkyl-4-aryl-1-cyclopentadienyl, 4-alkyl-5-aryl-1-cyclopentadienyl, 4,5-dialkyl-1-cyclopentadienyl, 5-trialkylsilyl-4-alkyl-1-cyclopentadienyl or 4,5-dialkylsilyl-1-cyclopentadienyl.

In the above formula (1), B is preferably the same unsubstituted or substituted benzindenyl group as the above A, and both A and B may be the same or different.

Y is a substituted boron group having bonds to A and B and having hydrogen or a $C_{1-20}$ hydrocarbon group, as a substituent. The substituent in Y may contain from one to three nitrogen, boron, silicon, phosphorous, selenium, oxygen or sulfur atoms, or may have a cyclic structure.

When Y is a substituted boron group having bonds to A and B and having hydrogen or a $C_{1-20}$ hydrocarbon group, as a substituent, the hydrocarbon substituent may, for example, be an alkyl group, an aryl group, an alkylaryl group or an arylalkyl group, and specific examples thereof include a phenylboranediyl group (another name: a phenylboryl group), a p-methylphenylboranediyl group, a methylboranediyl group, and an isopropylboranediyl group.

When Y is a substituted boron group having bonds to A and B and having a $C_{1-20}$ hydrocarbon group containing from one to three nitrogen, boron, silicon, phosphorus, selenium, oxygen or sulfur atoms, it may, for example, be a dialkylaminoboranediyl group (another name: a dialkylamideborane group), an alkyl-substituted silylboranediyl group, an alkyl-substituted silylaminoboranediyl group (another name: an alkyl-substituted silylamideborane group), an alkyl-substituted silyl-substituted methylboranediyl group, or an alkoxy-substituted boranediyl group. Specific examples thereof include a dimethylaminoboranediyl group, a diisopropylaminoboranediyl group, a dimethylsilylboranediyl group, a bistrimethylsilylaminoboranediyl group, a tristrimethylsilylmethylboranediyl group and a bistrimethylsilylmethylboranediyl group. Particularly preferred is a dimethylaminoboranediyl group, a diisopropylaminoboranediyl group, a dimethylsilylaminoboranediyl group, an isopropoxyboranediyl group or a tertiary butoxyboranediyl group. To the boron of Y, a suitable Lewis base such as trimethylphosphine, may be coordinated.

X is each independently hydrogen, halogen, a $C_{1-15}$ alkyl group, a $C_{3-15}$ alkenyl group, a $C_{6-10}$ aryl group, a $C_{8-12}$ alkylaryl group, a silyl group having a $C_{1-4}$ hydrocarbon substituent, a $C_{1-10}$ alkoxy group, or an amide or amino group having a $C_{1-22}$ hydrocarbon substituent, n is an integer of 0, 1 or 2, and when X is plural, the plurality of X may have bonds. The halogen may, for example, be chlorine or bromine, the alkyl group may, for example, be a methyl group or an ethyl group, the aryl group may, for example, be a phenyl group, the alkylaryl group may, for example, be a benzyl group, the silyl group may, for example, be a trimethylsilyl group, the alkoxy group may, for example, be a methoxy group, an ethoxy group or an isopropoxy group, and the amide group may, for example, be a dimethyl amide group or an N-methylanilide group.

M is zirconium, hafnium or titanium, particularly preferably zirconium.

As examples of such a transition metal compound, the following compounds may be mentioned.

For example, diisopropylaminoboranediylbis(4,5-benz-1-indenyl)zirconium dichloride {another name:

diisopropylaminoboranediylbis(benz[e]indenyl)zirconium dichloride, or diisopropylamideboranediylbis(4,5-benz-1-indenyl)zirconium dichloride},

dimethylaminoboranediylbis(4,5-benz-1-indenyl)zirconium dichloride, diethylaminoboranediylbis(4,5-benz-1-indenyl)zirconium dichloride,
diisopropylaminoboranediyl(cyclopentadienyl) (4,5-benz-1-indenyl)zirconium dichloride,
diisopropylaminoboranediyl(1-indenyl)(4,5-ben-1-indenyl)zirconium dichloride,
diisopropylaminoboranediyl(1-fluorenyl)(4,5-benz-1-indenyl)zirconium dichloride,
diisopropylaminoboranediyl(4-phenyl-1-indenyl)(4,5-benz-1-indenyl)zirconium dichloride,
diisopropylaminoboranediyl(4-naphthyl-indenyl)(4,5-benz-1-indenyl)zirconium dichloride,
diisopropylaminoboranediylbis(5,6-benz-1-indenyl)zirconium dichloride,
diisopropylaminoboranediyl(5,6-benz-1-indenyl) (1-indenyl)zirconium dichloride,
diisopropylaminoboranediylbis(6,7-benz-1-indenyl)zirconium dichloride,
diisopropylaminoboranediyl(6,7-benz-1-indenyl) (1-indenyl)zirconium dichloride,
diisopropylaminoboranediylbis(4,5-naphtho-1-indenyl)zirconium dichloride,
diisopropylaminoboranediylbis(α-acenaphtho-1-indenyl)zirconium dichloride,
diisopropylaminoboranediylbis(3-cyclopenta[c]phenanthryl)zirconium dichloride,
diisopropylaminoboranediyl(3-cyclopenta[c]phenanthryl)(1-indenyl)zirconium dichloride,
diisopropylaminoboranediylbis(1-cyclopenta[1]phenanthryl)zirconium dichloride,
diisopropylaminoboranediyl(1-cyclopenta[1]phenanthryl)(1-indenyl)zirconium dichloride,
diisopropylaminoboranediylbis(4,5-benz-1-indenyl)zirconiumbis(dimethylamide),
diisopropylaminoboranediyl(1-indenyl)(4,5-benz-1-indenyl)zirconiumbis(dimethylamide),
diisopropylaminoboranediylbis(2-methyl-4,5-benz-1-indenyl)zirconium dichloride,
diisopropylaminoboranediyl(2-methyl-4,5-benz-1-indenyl)(2-methyl-1-indenyl)zirconium dichloride,
diisopropylaminoboranediyl(2-methyl-4,5-benz-1-indenyl)(1-indenyl)zirconium dichloride,
diisopropylaminoboranediylbis{1-(2-methylcyclopenta[1]phenanthryl)}zirconium dichloride, or
diisopropylaminoboranediylbis(4,5-benz-1-indenyl)zirconiumbis(N-methylanilide) may be mentioned.

Further, phenylboranediylbis(4,5-benz-1-indenyl)zirconium dichloride {another name:

phenylboranediylbis (benz[e]indenyl)zirconium dichloride or phenylborylbis(4,5-benz-1-indenyl)zirconium dichloride}, phenylboranediyl(cyclopentadienyl)(4,5-benz-1-indenyl)zirconium dichloride, phenylboranediyl(1-indenyl) (4,5-benz-1-indenyl)zirconium dichloride, phenylboranediyl(1-fluorenyl)(4,5-benz-1-indenyl) zirconium dichloride, phenylboranediyl(4-phenyl-1-indenyl)(4,5-benz-1-indenyl)zirconium dichloride, phenylboranediyl(4-naphthyl-1-indenyl)(4,5-benz-1-indenyl)zirconium dichloride, phenylboranediylbis(5,6-benz-1-indenyl)zirconium dichloride, phenylboranediyl(5,6-benz-1-indenyl)(1-indenyl)zirconium dichloride, phenylboranediylbis(6,7-benz-1-indenyl)zirconium dichloride, phenylboranediyl(6,7-benz-1-indenyl)(1-indenyl)zirconium dichloride, phenylboranediylbis(4,5-naphtho-1-indenyl)zirconium dichloride, phenylboranediylbis(α-acenaphtho-1-indenyl)zirconium dichloride, phenylboranediylbis (3-cyclopenta[c]phenanthryl)zirconium dichloride, phenylboranediyl(3-cyclopenta[c]phenanthryl)(1-indenyl)zirconium dichloride, phenylboranediylbis(1-cyclopenta[1]phenanthryl)zirconium dichloride, phenylboranediyl (1-cyclopenta[1]phenanthryl)(1-indenyl)zirconium dichloride, phenylboranediylbis(4,5-benz-1-indenyl)zirconium bis (dimethylamide), phenylboranedlyl(1-indenyl)(4,5-benz-1-indenyl)zirconium bis(dimethylamide), phenylboranediylbis(2-methyl-4,5-benz-1-indenyl)zirconium dichloride, phenylboranediyl(2-methyl-4,5-benz-1-indenyl)(2-methyl-1-indenyl)zirconium dichloride, phenylboranediyl(2-methyl-4,5-benz-1-indenyl)(1-indenyl)zirconium dichloride, phenylboranediylbis{1-(2-methyl-cyclopenta[1]-phenanthryl)}zirconium dichloride, or phenylboranediylbis(4,5-benz-1-indenyl)zirconium bis(N-methylanilide) may, for example, be mentioned.

In the foregoing, transition metal compounds having a diisopropylaminoboranediyl group (a diisopropylamideborane group) or a phenylboranediyl group (a phenylboryl group) as Y, have been exemplified, but the present invention is not limited thereto.

Further, as transition metal compounds, zirconium complexes have been exemplified, but titanium or hafnium complexes similar to the compounds as described above can suitably be employed. Further, a mixture of a raceme and a meso form may be employed. Preferably, a raceme is employed. With respect to an asymmetric transition metal compound, a pseudoraceme is preferably employed. In such a case, a D-form or a L-form may be employed.

When the transition metal catalyst component of the present invention is used as a polymerization catalyst, it can exhibit a very high polymerization activity which has not heretofore been observed, for polymerization or copolymerization of an olefin such as ethylene or propylene. Further, the polymer or copolymer thereby obtainable can have a practically sufficiently high molecular weight.

Further, when the transition metal catalyst component of the present invention is used as a polymerization catalyst, it exhibits a very high activity for copolymerization of an aromatic vinyl compound-olefin. Particularly, it exhibits a high activity which has not heretofore been observed, for an aromatic vinyl compound-olefin copolymer having a

relatively small content of an aromatic vinyl compound i.e. having an aromatic vinyl compound content of from 0.1 mol% to 30 mol%. Further, the aromatic vinyl compound-olefin copolymer having such an aromatic vinyl compound content range, thereby obtainable, has a feature that it has a practically sufficiently high molecular weight.

Further, it is possible to produce a copolymer having a high aromatic vinyl compound content, particularly an aromatic vinyl compound-ethylene copolymer wherein the aromatic vinyl compound content exceeds 55 mol%.

In this specification, the aromatic vinyl compound content of the copolymer represents the content of units derived from an aromatic vinyl compound monomer, contained in the copolymer. The same applies to the olefin content or the diene content.

The second aspect of the present invention is a polymerization catalyst for the production of an olefin type polymer, or a polymerization catalyst for the production of an aromatic vinyl compound-olefin copolymer, having a very high activity and productivity, which comprises such a transition metal catalyst component for polymerization and a cocatalyst, and a method for producing an olefin type polymer or copolymer and a method for producing an aromatic vinyl compound-olefin copolymer, by means thereof.

As the cocatalyst to be used in the present invention, a cocatalyst which has heretofore been used in combination with a transition metal catalyst component, can be used. As such a cocatalyst, an aluminoxane (or an alumoxane) or a boron compound can suitably be used.

Further, the present invention provides a method for producing an aromatic vinyl compound-olefin copolymer wherein a copolymer to be used is an aluminoxane (or an alumoxane) represented by the following formula (2) or (3):

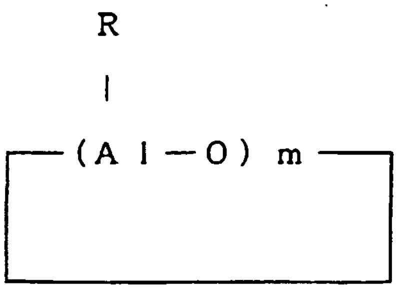

(2)

In the formula, R is a $C_{1-5}$ alkyl group, a $C_{6-10}$ aryl group or hydrogen, and M is an integer of from 2 to 100. The plurality of R may be the same or different from one another.

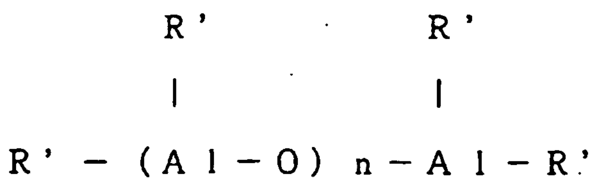

(3)

In the formula, R' is a $C_{1-5}$ alkyl group, a $C_{6-10}$ aryl group or hydrogen, and n is an integer of from 2 to 100. The plurality of R' may be the same or different from one another.

As the aluminoxane, methylalumoxane, ethylalumoxane or triisobutylalumoxane is preferably employed. Particularly preferably, methylalumoxane is employed. If necessary, a mixture of different types of such alumoxanes may be employed. Further, such an alumoxane may be used in combination with an alkylaluminum, such as trimethylaluminum, triethylaluminum, triisobutylaluminum or an alkylaluminum containing halogen, such as dimethylaluminum chloride.

Addition of an alkylaluminum is effective for removing substances which prevent polymerization, such as a polymerization inhibiter in the aromatic vinyl compound, or moisture in the aromatic vinyl compound or the solvent, or for removing adverse effects against the polymerization reaction.

However, it is not necessarily required to add an alkylaluminum at the time of the polymerization, if their amount is preliminarily reduced to a level not to influence the polymerization, by a known method such as preliminary distillation of the aromatic vinyl compound, the solvent, etc., bubbling with a dry inert gas or passing through a molecular sieve, or by increasing the amount of the alumoxane to some extent or adding the alumoxane in divided portions.

In the present invention, a boron compound may be used as a cocatalyst together with the above transition metal catalyst component.

The boron compound to be used as a cocatalyst may, for example, be triphenylcarbeniumtetrakis(pentafluorophenyl) borate {trityltetrakis(pentafluorophenyl)borate}, lithium tetra(pentafluorophenyl)borate, tri(pentafluorophenyl) boran, trimethylammoniumtetraphenyl borate, triethylammoniumtetraphenyl borate, tripropylammoniumtetraphenyl borate, tri(n-butyl)ammoniumtetraphenyl borate, tri(n-butyl)ammoniumtetra(p-tolyl)phenyl borate, tri(n-butyl)ammoniumtetra(p-ethylphenyl)borate, tri(n-butyl)ammoniumtetra(pentafluorophenyl)borate, trimethylammoniumtetra(p-tolyl) borate, trimethylammoniumtetrakis-3,5-tetramethylphenyl borate, triethylammoniumtetrakis-3,5-dimethylphenyl borate, tributylammoniumtetrakis-3,5-dimethylphenyl borate, tributylammoniumtetrakis-2,4-dimethylphenyl borate, aniliumtetrakispentafluorophenyl borate, N,N'-dimethylaniliumtetraphenyl borate, N,N'-dimethylaniliumtetrakis(p-tolyl)borate, N,N'-dimethylaniliumtetrakis(m-tolyl)borate, N,N'-dimethylaniliumtetrakis(2,4-dimethylphenyl)borate, N,N'-dimethylaniliumtetrakis(3,5-dimethylphenyl)borate, N,N'-dimethylaniliumtetrakis(pentafluorophenyl)borate, N,N'-diethylaniliumtetrakis(pentafluorophenyl)borate, N,N'-2,4,5-pentamethylaniliumtetraphenyl borate, N,N'-2,4,5-pentaethylaniliumtetrraphenyl borate, di-(isopropyl)ammoniumtetrakispentafluorophenyl borate, dicyclohexylammoniumtetraphenyl borate, triphenylphosphoniumtetraphenyl borate, tri(methylphenyl)phosphoniumtetraphenyl borate, tri(dimethylphenyl)phosphoniumtetraphenyl borate, triphenylcarbeniumtetrakis(p-tolyl)borate, triphenylcarbeniumtetrakis(m-tolyl)borate, triphenylcarbeniumtetrakis(2,4-dimethylphenyl)borate, triphenylcarbeniumtetrakis(3,5-dimethylphenyl)borate, tropiliumtetrakispentafluorophenyl borate, tropiliumtetrakis(p-tolyl)borate, tropiliumtetrakis(m-tolyl)borate, tropiliumtetrakis(2,4-dimethylphenyl)borate or tropiliumtetrakis(3,5-dimethylphenyl)borate.

Such a boron compound and the above-mentioned organoaluminum compound may be used at the same time.

Especially when a boron compound is used as a cocatalyst, addition of an alkylaluminum compound such as triisobutylaluminum is effective for the removal of impurities which adversely affect the polymerization, such as water contained in the polymerization system.

As olefins to be used in the present invention, $C_{2-20}$ $\alpha$-olefins such as ethylene, propylene, 1-butene, 1-hexene, 4-methyl-1-pentene, 1-octene and $C_{5-20}$ cyclic olefins such as cyclopentene, norbornene and norbonadiene, are suitable. These olefins may be used in combination as a mixture of two or more of them. As such olefins, ethylene, propylene, 1-hexene or 1-octene are preferred.

Aromatic vinyl compounds to be used in the present invention may, for example, be styrene and various substituted styrenes such as p-methylstyrene, m-methylstyrene, o-methylstyrene, o-t-butylstyrene, m-t-butylstyrene, p-t-butylstyrene, p-chlorostyrene, o-chlorostyrene, and $\alpha$-methylstyrene.

Industrially preferably, styrene, p-methylstyrene or p-chlorostyrene is used. Particularly preferably, styrene is used.

Further, at least one of $C_{4-30}$ dienes and polyenes having a plurality of carbon double bonds in their molecules, may be copolymerized, as the case requires. Such dienes and polyenes may, for example, be ethylidene norbornene, various isomers of vinylcyclohexene, butadiene, 1,4-hexadiene, 1,5-hexadiene or various divinylbenzenes of ortho, metha and para. As the divinylbehzene, a mixture of various isomers may be employed. The content of such a diene or polyene is usually from 0.001 mol% to 3 mol%, preferably from 0.01 mol% to 0.5 mol%, of the entirety.

For the production of a copolymer of the present invention, the above-mentioned olefin and/or the above exemplified aromatic vinyl compound, the transition metal catalyst component as a metal complex and the cocatalyst are contacted. As to the manner and order for contacting, an optional known method may be employed.

As a method for the above polymerization or copolymerization, it is possible to employ a method for carrying out the polymerization in a liquid monomer without using any solvent, or a method of using a single solvent or a mixed solvent selected from saturated aliphatic or aromatic hydrocarbons or halogenated hydrocarbons, such as pentane, hexane, heptane, cyclohexane, benzene, toluene, ethylbenzene, xylene, chlorobenzene, chlorotoluene, methylene chloride or chloroform. Preferably, a mixed alkane solvent, cyclohexane, toluene, or ethylbenzene is used. The polymerization mode may be either solution polymerization or slurry polymerization. Further, if necessary, a conventional method such as batch polymerization, continuous polymerization or multistep polymerization, may be employed.

A single or connected plural linear or loop pipe polymerization may also be used. In such a case, the pipe-shaped polymerizer may be equipped with a dynamic or static mixer, or various known mixers such as a static mixer serving also as a heat remover, or various known coolers such as a cooler provided with slender tubes for removing heat. Further, it may have a preliminary polymerizer of a batch type.

Further, a method of e.g. gas phase polymerization may be employed. The gas phase polymerization is economical and preferred particularly in a case where a homopolymer of an $\alpha$-olefin having at most 6 carbon atoms such as ethylene or propylene, or a copolymer thereof, is to be produced. In the gas phase polymerization, the transition metal compound may be supported on an optional known support.

The copolymerization temperature is suitably from -78°C to 200°C. A polymerization temperature lower than -78°C is industrially disadvantageous, and if the temperature exceeds 200°C, decomposition of the metal complex is likely to take place, such being undesirable. Industrially more preferably, the temperature is from 0 to 160°C, particularly from 30 to 160°C.

The pressure during the polymerization is suitably from 0.1 to 100 atm, preferably from 1 to 30 atm, industrially particularly preferably, from 1 to 10 atm.

When an organoaluminum compound is used as a cocatalyst, it is preferably used in an aluminum atom/complex metal atom ratio of from 0.1 to 100,000, preferably from 10 to 10,000, relative to the metal of the complex. If the ratio is smaller than 0.1, the metal complex can not effectively be activated, and if it exceeds 100,000, such will be economically disadvantageous.

When a boron compound is used as a cocatalyst, it is used in an atomic ratio of boron atom/complex metal atom of from 0.01 to 100, preferably from 0.1 to 10, particularly preferably 1. If the atomic ratio is less than 0.01, the metal complex can not effectively be activated, and if it exceeds 100, such is economically disadvantageous.

The metal complex and the cocatalyst may be prepared by mixing them outside the polymerization tank, or they may be mixed in the tank during polymerization.

Now, the olefin type polymer obtainable by the method of the present invention will be described. However, the olefin type polymer obtainable by the present invention is not limited to the following example.

The olefin type polymer obtainable by the method of the present invention is a homopolymer made of a $C_{2-20}$ $\alpha$-olefin monomer or a $C_{5-20}$ cyclic olefin monomer, or a copolymer made of a plurality of monomers selected from such monomers. Preferably, it is an olefin polymer such as polyethylene, polypropylene or polybutene, an ethylene-$\alpha$-olefin copolymer such as an ethylene-propylene copolymer, an ethylene-1-butene copolymer, an ethylene-1-hexene copolymer, or an ethylene-1-octene copolymer, or an ethylene-cyclic olefin copolymer such as an ethylene-norbornene copolymer.

Further, the above-mentioned diene or polyene may be copolymerized. As such an example, an ethylene-ethylidene norbornene copolymer, an ethylene-propylene-ethylidene norbornene copolymer, an ethylene-propylene-butadiene copolymer, an ethylene-propylene-divinylbenzene copolymer, or an ethylene-1-octene-divinylbenzene copolymer, may, for example, be mentioned.

The molecular weight of the olefin type polymer obtainable by the method of the present invention, is at least 1,000 and at most 1,000,000 by the weight average molecular weight, and it is from 30,000 to 500,000, when the mechanical properties and the processability of the polymer are taken into consideration. Further, the molecular weight distribution is usually from 1.2 to 6, preferably from 1.5 to 3.

The weight average molecular weight here is a molecular weight calculated as polystyrene obtained by GPC using a standard polystyrene. The same applies in the following description.

In the case of an olefin copolymer containing ethylene as the main component, its density usually shows a value of at most 0.96 and at least 0.82 g/$cm^3$. Further, the melting point by DSC can take a value of at least 70°C and at most 140°C, preferably at least 90°C and at most 135°C.

Further, the olefin type polymer can be produced by suitably changing the polymerization condition or the polymerization method, even if it is a polymer containing no long chain branched structure i.e. containing less than 0.1 branched carbon among 1,000 carbon atoms of the polymer, or a polymer having a long chain branched structure i.e. containing at least 0.1 branched carbon among 1,000 carbon atoms of the polymer.

Now, the aromatic vinyl compound-olefin copolymer obtainable by the method of the present invention will be described. The aromatic vinyl compound-olefin copolymer obtainable by the method of the present invention, is a copolymer comprising the above-mentioned olefin monomer and the above-mentioned aromatic vinyl compound. Particularly preferably, it is an ethylene-styrene copolymer. Further, the olefin to be used may be plural, and in such a case, the ethylene-$\alpha$-olefin-aromatic vinyl compound copolymer may, for example, be an ethylene-propylene-styrene copolymer, an ethylene-1-hexene-styrene copolymer, an ethylene-1-butene-styrene copolymer or an ethylene-1-octene-styrene copolymer. The $\alpha$-olefin in this ethylene-$\alpha$-olefin-aromatic vinyl compound copolymer does not include ethylene. Further, the ethylene-cyclic olefin-aromatic vinyl compound copolymer may, for example, be an ethylene-norbornene-styrene copolymer.

Further, the above-mentioned diene or polyene may be copolymerized, and as such an example, an ethylene-styrene-ethylidene norbornene copolymer, an ethylene-styrene-ethylidene norbornene copolymer, an ethylene-styrene-butadiene copolymer, an ethylene-styrene-divinylbenzene copolymer, an ethylene-1-octene-styrene-divinylbenzene copolymer or an ethylene-1-butene-styrene-divinylbenzene copolymer may be mentioned. The aromatic vinyl compound-olefin copolymer containing such a diene or a polyene, can suitably be used for a cross copolymer disclosed in WO00/37517.

In the following, reference is made to a styrene-ethylene copolymer as an example of the aromatic vinyl compound-olefin copolymer of the present invention. However, the aromatic vinyl compound-olefin copolymer of the present invention is by no means restricted to such a styrene-ethylene copolymer.

The structure is determined by a nuclear magnetic resonance method (NMR).

The copolymer of the present invention may have main peaks at the following positions in 13C-NMR using TMS as standard.

Namely, it shows peaks attributable to the main chain methylene and the main chain methine carbon in the vicinity of from 24 to 25 ppm, 27 ppm, 30 ppm, from 34 to 37 ppm, from 40 to 41 ppm and from 42 to 46 ppm, peaks attributable to five atoms not bonded to the polymer chain among phenyl groups in the vicinity of 126 ppm and 128 ppm,

and a peak attributable to one carbon bonded to the polymer main chain among phenyl groups in the vicinity of 146 ppm.

The styrene-ethylene copolymer of the present invention is a styrene-ethylene copolymer having a styrene content of at least 0.1 and less than 99.9%, more preferably at least 1 and less than 99.9%, by molar fraction, and the stereoregularity of phenyl groups in the alternating structure of styrene and ethylene of the following formula (4) contained in its structure is represented by an isotactic diad index m of larger than 0.75, and the alternating structure index λ of the following formula (i) is smaller than 70 and larger than 0.1, preferably smaller than 70 and larger than 1:

$$\lambda = A3/A2\times100 \qquad (i)$$

Here, A3 is the sum of areas of three peaks a, b and c attributable to the carbons in styrene-ethylene alternating structure of the following formula (4'). Further, A2 is the sum of areas of peaks attributable to the main chain methylene and the main chain methine carbon, as observed within a range of from 0 to 50 ppm by 13C-NMR using TMS as standard:

$$-(\underset{\underset{Ph}{|}}{CH}-CH_2-CH_2-CH_2)_x- \qquad (4)$$

wherein Ph is an aromatic group such as a phenyl group, and x is an integer of at least 2, representing the number of repeating units,

$$-(\underset{\underset{Ph}{|}}{\overset{a}{CH}}-\overset{b}{CH_2}-\overset{c}{CH_2}-\overset{b}{CH_2})_x- \qquad (4')$$

wherein Ph is an aromatic group such as a phenyl group, and x is an integer of at least 2, representing the number of repeating units.

In the styrene-ethylene copolymer of the present invention, the stereoregularity of phenyl groups in the alternating copolymer structure of ethylene and styrene being an isotactic structure is meant for a structure wherein the isotactic diad index m (or a meso diad fraction) is more than 0.75, preferably more than 0.85, more preferably more than 0.95.

The isotactic diad index m of the alternating copolymer structure of ethylene and styrene can be obtained by the following formula (ii) from an area Ar of the peak attributable to the r structure and an area Am of the peak attributable to the m structure appearing in the vicinity of 25 ppm.

$$m=Am/(Ar+Am) \qquad (ii)$$

The positions of the peaks may sometimes shift more or less depending upon the measuring conditions or the solvent used.

For example, when chloroform-d is used as a solvent, and TMS is used as standard, the peak attributable to the r structure appears in the vicinity of from 25.4 to 25.5 ppm, and the peak attributable to the m structure appears in the vicinity of from 25.2 to 25.3 ppm.

Further, when 1,1,2,2-tetrachloroethane-d2 is used as a solvent, and the center peak (shift value of 73.89 ppm from TMS standard) of the triplet of the 1,1,2,2-tetrachloroethane-d2 is used as standard, the peak attributable to the r structure appears in the vicinity of from 25.3 to 25.4 ppm, and the peak attributable to the m structure appears in the vicinity of from 25.1 to 25.2 ppm.

Here, the m structure represents a meso diad structure, and the r structure represents a racemic diad structure.

In the most preferred styrene-ethylene copolymer of the present invention, a peak attributable to the r structure of the alternating structure of ethylene and styrene is not substantially observed.

The styrene-ethylene copolymer of the present invention may preferably have a chain structure in which styrene units are bonded head-to-tail, i.e. a chain structure of at least two styrenes, preferably at least three styrenes, which can be represented by the following structure:

$$-(CH-CH_2)_n-$$
$$|$$
$$Ph$$

wherein n is an optional integer of at least 2, and Ph is an aromatic group such as a phenyl group.

The chain structure wherein two styrene units are bonded head-to-tail, gives peaks in the vicinity of from 42.4 to 43.0 ppm and from 43.7 to 44.5 ppm in the 13C-NMR measurement using TMS as standard and 1,1,2,2-tetrachloroethane-d2 as a solvent.

The chain structure in which at least three styrene units are bonded head-to-tail gives peaks also in the vicinity of from 40.7 to 41.0 ppm and from 43.0 to 43.6 ppm in a similar measurement. Accordingly, the chain structure in which at least two styrene units bonded head-to-tail gives a peak in the vicinity of from 40 to 45 ppm in a similar measurement.

On the other hand, in the conventional so-called pseudo random copolymer, no head-to-tail chain structure of styrene can be found even in the vicinity of 50 mol% at which the styrene content is maximum. Further, even if homopolymerization of styrene is attempted by using a catalyst for the preparation of a pseudo random copolymer, no polymer is obtainable. Depending upon e.g. the polymerization condition, an extremely small amount of an atarctic styrene homopolymer may sometimes be obtained. However, this is considered to have been formed by radical polymerization or cation polymerization by coexisting methylalumoxane or an alkylaluminum included therein.

Further, in the styrene-ethylene copolymer of the present invention, the stereoregularity of phenyl groups in the head-to-tail chain structure of styrene units is isotactic.

The stereoregularity of phenyl groups in the head-to-tail chain structure of styrene units being isotactic, is meant for a structure wherein the isotactic diad index ms (or a meso diad fraction) is larger than 0.5, preferably at least 0.7, more preferably at least 0.8.

The stereoregularity of the chain structure of styrene units is determined by the peak position of methylene carbon in the vicinity of from 43 to 44 ppm as observed by 13C-NMR and by the peak position of the main chain proton as observed by 1H-HMR.

It is known that peaks of methylene carbon of the structure derived from inversion of styrene in a conventional pseudo random copolymer having no stereoregularity, are present in two regions of from 34.0 to 34.5 ppm and from 34.5 to 35.2 ppm (for example, Polymer Preprints, Japan, 42, 2292 (1993)).

With the styrene-ethylene copolymer of the present invention, a peak attributable to methylene carbon of an inversion bond structure derived from styrene is observed in a region of from 34.5 to 35.2 ppm, but no substantial peak is observed at from 34.0 to 34.5 ppm.

This indicates one of the characteristics of the copolymer of the present invention and indicates that the copolymer of the present invention may have high stereoregularity of phenyl groups even with an inversion bond structure of the following formula derived from styrene.

$$-CH_2-CH_2-CH-CH_2-CH_2-CH-CH_2-CH_2-$$
$$|\qquad\qquad\qquad |$$
$$Ph\qquad\qquad\quad Ph$$

The weight average molecular weight of the styrene-ethylene copolymer obtainable by the present invention is at least 1,000 and at most 1,000,000, and taking into consideration the mechanical properties and the processability, it is preferably at least 30,000 and at most 500,000. The molecular weight distribution (Mw/Mn) is at most 6, preferably

at most 4, particularly preferably at most 3 and at least 1.2.

In the foregoing, a styrene-ethylene copolymer has been described as a typical example of the aromatic vinyl compound-olefin copolymer of the present invention. However, the above description applies generally to an aromatic vinyl compound-olefin copolymer employing the above-mentioned aromatic vinyl compound.

Now, the present invention will be described with reference to Examples, but the present invention is by no means restricted to the following Examples.

The analyses of the copolymers obtained in the respective Examples and Comparative Examples were carried out by the following methods.

The 13C-NMR spectrum was measured using TMS as standard, by using α-500 manufactured by Nippon Denshi Kabushiki Kaisha and using a chloroform-d solvent or a 1,1,2,2-tetrachloroethane-d2 solvent. Here, the measurement using TMS as standard is the following measurement. Firstly, using TMS as standard, the shift value of the center peak of the triplet 13C-NMR peak of 1,1,2,2-tetrachloroethane-d2 was determined. The shift value of the triplet center peak of the 1,1,2,2-tetrachloroethane-d2 was 73.89 ppm. Then, the copolymer was dissolved in the 1,1,2,2-tetrachloroethane-d2, and the 13C-NMR was measured, and each peak shift value was calculated using the triplet center peak of the 1,1,2,2-tetrachloroethane-d2 as 73.89 ppm. The measurement was carried out by dissolving the polymer in an amount of 3 wt/vol% in the solvent.

The 13C-NMR spectrum measurement for quantitative analysis of peak areas, was carried out by a proton gate decoupling method having NOE erased, by using pulses with a pulse width of 45° and a repeating time of 5 seconds as standard.

When the measurement was carried out under the same conditions except that the repeating time was changed to 1.5 seconds, the measured values of peak areas of the copolymer agreed to the values obtained in the case where the repeating time was 5 seconds, within a measurement error range.

The styrene content in the copolymer was determined by 1H-NMR. As the apparatus, α-500 manufactured by Nippon Denshi Kabushiki Kaisha and AC-250 manufactured by BRUKER Co. were used. The determination was made by comparing the intensity of the peak (6.5 to 7.5 ppm) attributable to the proton of a phenyl group and the proton peak (0.8 to 3 ppm) attributable to an alkyl group, measured by using TMS as standard and chloroform-d or 1,1,2,2-tetrachloroethane-d2 as a solvent.

The molecular weights in Examples are weight average molecular weights obtained by GPC (gel permeation chromatography) as calculated as standard polystyrene.

A copolymer soluble in THF at room temperature, was measured by means of HLC-8020, manufactured by TOSOH CORPORATION using THF as a solvent.

A copolymer insoluble in THF at room temperature, was measured at 145°C by means of HLC-8121 apparatus manufactured by TOSOH CORPORATION and using o-dichlorobenzene as a solvent.

The DSC measurement was carried out by using DSC200, manufactured by Seiko Denshi K.K. in a nitrogen stream at a temperature raising rate of 10°C/min. 10 mg of a sample was heated to 240°C at a temperature raising rate of 20°C/min. (1st run), rapidly cooled to -100°C to 240°C at a rate of 10°C/min. and the DSC measurement was carried out (2nd run) to obtain the melting point, the heat of crystal fusion and the glass transition temperature.

MFR (melt flow rate) was measured in accordance with JIS K7210. The measurement was carried out at a temperature of 230°C or 200°C under a load of 5 kg.

Preparation of a complex

rac-Diisopropylaminoboranediylbis(4,5-benz-1-indenyl)zirconium dichloride (another name: rac-isopropylamideboranebis(4,5-benz-1-indenyl)zirconium dichloride) was prepared by the following method.

4,5-Benzindene was prepared by a known method.

rac-Diisopropylaminoboranediylbis(4,5-benz-1-indenyl)zirconium dichloride was prepared with reference to the synthesis of rac-diisopropylaminoboranediylbis(1-indenyl)zirconium dichloride as disclosed in Organometallics 1999, 18, 2288, but by changing the indene used, to 4,5-benzindene.

The obtained complex showed peaks at the following positions in 1H-NMR measured by using TMS as standard and using $CDCl_3$ as a solvent. δ 1.50 ppm (d, 6H), 1.56 ppm (d, 6H), 4.23 (Hept, 2H), 5.89 (d, 2H) 6.99-8.04 (many peaks, 14H)

rac-diisopropylaminoboranediylbis(4,5-benz-1-indenyl)zirconium dichloride {another name: rac-isopropylamideboranebis(4,5-benz-1-indenyl)zirconium dichloride}

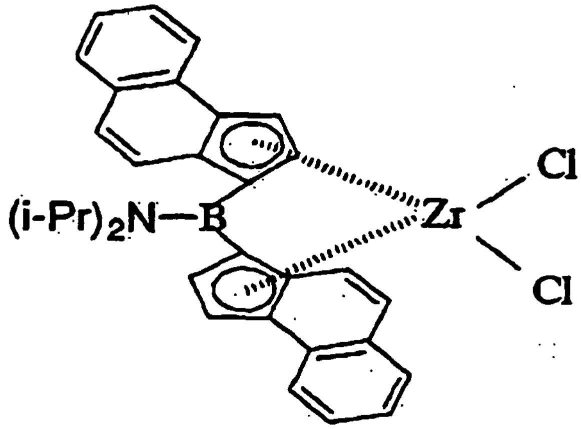

i-Pr: isopropyl group

Diisopropylaminoboranediylbis(2-methyl-4,5-benz-1-indenyl)zirconium dichloride (another name: diisopropylamideboranebis(2-methyl-4,5-benz-1-indenyl)zirconium dichloride) was prepared as follows.
2-Methyl-4,5-benzindene{1-H or 3-H-2-methylbenz[e]indene} was prepared by a known method.
It was prepared with reference to the synthesis of rac-diisopropylaminoboranediylbis(1-indenyl)zirconium dichloride as disclosed in Organometallics 1999, 18, 2288, but the indene used was changed to 2-methyl-4,5-benzindene.
The obtained complex was yellow crystals and showed peaks at the following positions in 1H-NMR measured by using TMS as standard and $CDCl_3$ as a solvent. $\delta$ 1.56 ppm (d, 6H), 1.58 ppm (d, 6H), 2.28 (s, 6H), 4.33 ppm (Hept, 2H), 7.17-7.98 (many peaks, 14H)

Diisopropylaminoboranediylbis(2-methyl-4,5-benz-1-indenyl)zirconium dichloride {another name: rac-diisopropylamideboranebis(2-methyl-4,5-benz-1-indenyl)zirconium dichloride}

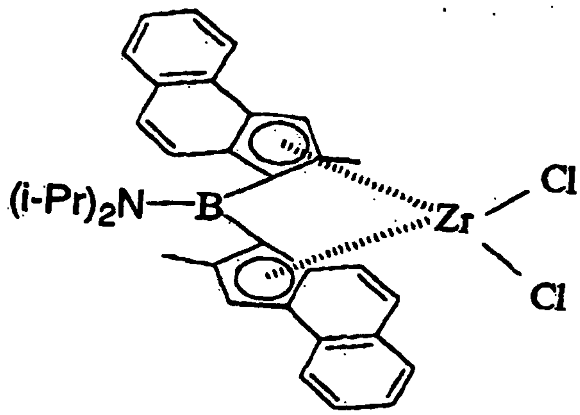

i-Pr: isopropyl group

EXAMPLE 1 (preparation of ethylene-styrene copolymer)

Polymerization was carried out by using an autoclave having a capacity of 10 ℓ and equipped with a stirrer and a jacket for heating and cooling.
4,000 mℓ of dehydrated toluene and 800 mℓ of dehydrated styrene were charged, and the inner temperature was raised to 50°C, followed by stirring. About 100 ℓ of nitrogen was used for bubbling to purge the interior of the system, and then, 8.4 mmol of triisobutylaluminum and 8.4 mmol, based on Al, of methylalumoxane (PMAO-3A, manufactured by TOSOH-AKZO K.K.) were added thereto. Ethylene was immediately introduced, and after the pressure was stabilized

at 1.1 MPa (10 kg/cm$^2$G), 100 mℓ of a toluene solution having 8.4 μmol of rac-diisopropylamideboranebis(4,5-benz-1-indenyl)zirconium dichloride (catalyst A) and 0.84 mmol of triisobutyl aluminum dissolved, was added to the autoclave from a catalyst tank installed above the autoclave. Immediately thereafter, polymerization started, and heat generation was observed. Therefore, the jacket was switched to full cooling, but the internal temperature rose to a level of from 50°C to the maximum of 89°C. Further, it was attempted to maintain the ethylene pressure at 1.1 MPa, but due to rapid absorption of ethylene, the supply did not catch up, and the pressure temporarily decreased to a level of 0.64 MPa. 21 Minutes later, the ethylene pressure was rapidly released, and the polymerization solution was discharged into a vessel containing a small amount of methanol to terminate polymerization, but from the consumption rate of ethylene (the consumption rate of ethylene during the polymerization is monitored by a mass flow controller), the polymerization was found to have proceeded without deactivation. The obtained polymerization solution was vigorously stirred and put into excess methanol in small portions to let the formed polymer precipitate. The product was dried under vacuum at 80°C until no further weight change was observed, to obtain 447 g of a polymer.

EXAMPLES 2 and 3 (preparation of ethylene-styrene copolymers)

Polymerization and post treatment were carried out in the same manner as in Example 1 under the conditions shown in Table 1. The amount of the catalyst used was reduced, whereby it was possible to control the temperature and the pressure to be constant during the polymerization. Further, in either case, the polymerization was proceeding without deactivation at the time of termination of the polymerization.

EXAMPLES 4 to 6 (preparation of ethylene-octene copolymers)

Polymerization and post treatment were carried out in the same manner as in Example 1 under the conditions shown in Table 1 using 1-octene instead of styrene. The amount of the catalyst used was reduced, whereby it was possible to control the temperature and the pressure to be constant during the polymerization. Further, in each case, the polymerization was proceeding without deactivation at the time of termination of the polymerization.

EXAMPLE 7 (preparation of ethylene-octene-styrene copolymers)

Polymerization and post treatment were carried out in the same manner as in Example 1 under the conditions shown in Table 1 by using ethylene and 1-octene.

In Table 1, the yield of the polymer and the content of the co-monomer are shown, and in Table 2, the analytical values of the obtained polymer are shown.

Table 1

| Examples, Comparative Examples | Cata lyst | Amount of catalyst (μmol) | MAO (mmol) | Amount of solvent (mℓ) | Amount of styrene (mℓ) | Amount of octene (mℓ) | Ethylene pressure (MPa) | Polymerization temperature (°C) | Polymerization time (min.) | Yield (g) | Activity (g/mol-catalyst. h)/ $10^6$ |
|---|---|---|---|---|---|---|---|---|---|---|---|
| Example 1 | A | 8.4 | P: 8.4 | T4000 | 800 | - | 1.1-0.64 | 50-89 | 21 | 447 | 152 |
| Example 2 | A | 2.1 | P: 8.4 | T4000 | 800 | - | 1.1 | 50-53 | 65 | 406 | 178 |
| Example 3 | A | 21 | P: 84 | T 800 | 4000 | - | 0.2 | 50 | 180 | 320 | 5.1 |
| Example 4 | A | 2.1 | P: 8.4 | T4400 | - | 400 | 1.1 | 50 | 20 | 453 | 647 |
| Example 5 | A | 0.8 | P: 8.4 | T4400 | - | 400 | 1.1 | 50 | 30 | 381 | 953 |
| Example 6 | A | 0.4 | P: 8.4 | T4700 | - | 100 | 1.1 | 50 | 60 | 326 | 815 |
| Example 7 | A | 2.1 | P: 8.4 | T4200 | 400 | 200 | 1.1 | 50 | 43 | 335 | 223 |
| Comparative Example 1 | B | 8.4 | P: 8.4 | T4000 | 800 | - | 1.1 | 70 | 180 | 137 | 5.4 |
| Comparative Example 2 | B | 2.1 | P: 8.4 | T4400 | - | 400 | 1.1 | 50 | 60 | 308 | 147 |

T: Toluene C: Cyclohexane -: No monomer used
Transition metal compound used in the catalyst A: rac-diisopropylaminoboranediylbis (4,5-benz-1-indenyl)zirconium dichloride
B: rac-phenylboranediylbis(1-indenyl) zirconium dichloride

Table 2

| Examples, Comparative Examples | St content (mol%) | 1-Octene content (mol%) | $Mw/10^4$ | Mw/Mn | Glass transition temperature | Melting point (°C) |
|---|---|---|---|---|---|---|
| Example 1 | 6.5 | - | 14.6 | 2.4 | -25 | 101.5 |
| Example 2 | 3.9 | - | 19.8 | 1.9 | -24 | 109.2 |
| Example 3 | 49.3 | - | 20.6 | 1.8 | 23 | 82.0 |
| Example 4 | - | 7.2 | 9.0 | 2.0 | -50 | 95.6 |
| Example 5 | - | 5.7 | 9.3 | 2.2 | -48 | 98.1 |
| Example 6 | - | 1.9 | 16.2 | 2.2 | -33 | 118.5 |
| Example 7 | 1.8 | 3.0 | 11.5 | 2.1 | -30 | 103.2 |
| Comparative Example 1 | 0 *1 | - | 81.8 | 2.3 | - | 137.0 |
| Comparative Example 2 | - | 0 *2 | Not measured | Not measured | - | 135.0 |
| *1: No peak attributable to a phenyl group observed by 1H-NMR<br>*2: No peak attributable to a methyl group observed by 1H-NMR | | | | | | |

It is evident that the catalysts comprising rac-diisopropylaminoboranediylbis(4,5-benz-1-indenyl)zirconium dichloride and MAO(methylalumoxane) exhibit very high activities for copolymerization of ethylene-α-olefin and copolymerization of styrene-ethylene. Further, it is possible to obtain copolymers having practically sufficiently high molecular weights. Further, it is possible to present a copolymer having a high molecular weight particularly for a styrene-ethylene copolymer having a low styrene content.

Literatures Organometallics 1999, 18, 2288, and Organometallics 1999, 18, 1363 disclose results of copolymerization of ethylene-1-octene using a catalyst comprising rac-diisopropylaminoboranediylbis(1-indenyl)zirconium dichloride i.e. a zirconocene compound having indenyl groups and the same bridged structure as the transition metal compound of the present invention, and methylalumoxane. According to the disclosure, a polymerization test is carried out under polymerization conditions of a higher polymerization temperature (140°C) and a higher ethylene pressure (3.4 MPa) than the Examples of the present invention, and a productivity of $17\times10^6$ g/ (molZr·atm) is shown. In the literatures, the polymerization time is not disclosed. To those skilled in the art, it is a general common knowledge that under such high polymerization temperature and pressure conditions, the activity increases as compared with lower conditions.

The catalysts comprising a transition metal compound and MAO of the present invention exhibit high activities (per hour) of $953\times10^6$ g/(molZr·h) and $87\times10^6$ g/(molZr·h·atm) even under conditions of a lower polymerization temperature (50°C) and pressure (1.1 MPa) in the Examples of the present invention. The polymerization was carried out for 30 minutes, but the polymerization was proceeding without deactivation, at the time of termination of the polymerization. Even from the yield of the polymer i.e. not from unit time, it is at least 44 g/(molZr·atm).

Namely, it is evident that it shows a remarkably higher polymerization activity than the above-mentioned catalyst comprising rac-diisopropylaminoboranediylbis(1-indenyl)zirconium dichloride and methylalumoxane.

13C-NMR of the copolymer obtained in Example 3 was measured. The meso diad fraction (isotactic diad index) obtained from the peak attributable to Sββ carbon of a styrene-ethylene alternate structure appearing in the vicinity of 25 ppm using TMS as standard, is at least 0.95, and it is evident that this copolymer has a high stereo regularity of isotactic in the alternating structure of ethylene and styrene. Further, in the vicinity of from 40 to 44 ppm, a peak attributable to a head-to-tail styrene chain structure was observed. Further, the alternating structural index λ obtained by the above-mentioned formula, was 50.

As the polymerization results of Example 7 and the analytical results of the obtained copolymer, show, the catalyst of this Example exhibits a high activity also in copolymerization of ethylene-styrene-1-octene and presents a copolymer having a high molecular weight. COMPARATIVE EXAMPLES 1 and 2

With reference to WO97/15581, phenylboranediylbis(1-indenyl)zirconium dichloride was prepared. Using this as a transition metal compound, copolymerization of styrene-ethylene and copolymerization of ethylene-1-octene were carried out under the polymerization conditions shown in Table 1. In a case where this transition metal compound was used as a catalyst, the co-monomer was not copolymerized, and only polyethylene was obtained. Further, its activity

was low as compared with Examples.

EXAMPLE 8 (preparation of an ethylene-octene copolymer)

Polymerization was carried out by using an autoclave having a capacity of 10 ℓ and equipped with a stirrer and a jacket for heating and cooling.

4,400 mℓ of toluene and 400 mℓ of 1-octene were charged, and the internal temperature was raised to 50°C, followed by stirring. About 200 ℓ of nitrogen was used for bubbling to purge the interior of the system, and 8.4 mmol of triisobutylaluminum and 8.4 mmol, based on Al, of methylalumoxane (PMAO-3A, manufactured by TOSOH-AKZO K.K.) were added thereto. Ethylene was immediately introduced, and after the pressure was stabilized at 1.1 MPa (10 kg/cm$^2$G), about 100 mℓ of a toluene solution having 0.84 μmol of rac-diisopropylaminoboranebis(2-methyl-4,5-benz-1-indenyl) zirconium dichloride (catalyst C) and 0.84 mmol of triisobutyl aluminum dissolved, was added to the autoclave from a catalyst tank installed above the autoclave. Immediately thereafter, polymerization started, and heat generation was observed. Therefore, the jacket was switched to full cooling, but the internal temperature rose to a level of from 50°C to the maximum of 72°C. The ethylene pressure during the polymerization was maintained to be 1.1 MPa. 25 Minutes later, the ethylene pressure was rapidly released, and the polymerization solution was discharged into a vessel containing a small amount of methanol to terminate the polymerization, but from the consumption rate of ethylene (the consumption rate of ethylene during the polymerization is monitored by a mass flow controller), the polymerization was found to have proceeded without deactivation. The obtained polymerization solution was vigorously stirred and put into excess methanol in small portions to let the formed polymer precipitate. The product was dried under vacuum at 80°C until no further weight change was observed, to obtain 417 g of a polymer.

EXAMPLES 9 and 10

Polymerization and post treatment were carried out in the same manner as in Example 7 under the conditions shown in Table 3. The amount of the catalyst used was reduced, whereby it was possible to control the temperature and the pressure to be constant during the polymerization. Further, in either case, the polymerization was proceeding without deactivation at the time of termination of the polymerization.

In Table 3, the yield of the polymer and the content of the co-monomer are shown, and in Table 4, the analytical values of the obtained polymer are shown.

Table 3

| Examples, Comparative Examples | Catalyst | Amount of catalyst (μmol) | MAO (mmol) | Amount of solvent (mℓ) | Amount of octene (mℓ) | Ethylene pressure (MPa) | Polymerization temperature (°C) | Polymerization time (min.) | Yield (g) | Activity (g/mol-catalyst h)/$10^6$ |
|---|---|---|---|---|---|---|---|---|---|---|
| Example 8 | C | 0.84 | P: 8.4 | T4400 | 400 | 1.1 | 50-72 | 25 | 417 | 1191 |
| Example 9 | C | 0.21 | P: 4.2 | T4700 | 100 | 1.1 | 90-115 | 10 | 261 | 7460 |
| Example 10 | C | 0.21 | P: 4.2 | T4400 | 400 | 1.1 | 90-103 | 18 | 194 | 3080 |

Transition metal compound used in the catalyst
C: rac-diisopropylaminoboranediylbis(2-methyl-4,5-benz-1-indenyl)zirconium dichloride
Other symbols: T: Toluene, C: cyclohexane, -: No monomer used
P: methylalumoxane (PMAO-3A, manufactured by TOSOH-AKZO K.K.)

Table 4

| Examples, Comparative Examples | 1-Octene content (mol%) | Mw/$10^4$ | Mw/Mn | Melting point (°C) | MFR 230°C under a load of 5 kg for 10 minutes |
|---|---|---|---|---|---|
| Example 8 | 5.8 | 16.9 | 2.2 | 94 | Not measured |
| Example 9 | 1.2 | 30.7 *1 | 2.5 *1 | 120 | 0.34 |
| Example 10 | 4.1 | 24.8 *1 | 2.6 *1 | 98 | 5.7 |
| *1: Measured by high temperature GPC | | | | | |

It is evident that the catalysts comprising rac-diisopropylaminoboranediylbis(2-methyl-4,5-benz-1-indenyl) zirconium dichloride and MAO exhibit very high activities for copolymerization of ethylene-$\alpha$-olefin. Further, it is possible to obtain copolymers having practically sufficiently high molecular weights.

The catalysts comprising the transition metal compounds and MAO of the present invention exhibit high activities (per hour) of 1,191$\times 10^6$ g/(molzr·h) and 108$\times 10^6$ g/ (molZr·h·atm) even under the conditions of Example 8 of a lower polymerization temperature (70°C) and a lower pressure (1.1 MPa) than the above-mentioned literatures. The polymerization was carried out for 25 minutes, but at the time of termination of the polymerization, polymerization was proceeding without deactivation. Even from the yield of the polymer by unit pressure rather than the unit time, it is at least 45 g/ (molZr·atm).

Further, the catalysts comprising the transition metal compound of the present invention and MAO exhibit activities of 7,460$\times 10^6$ g/(molZr·h) and 3,080$\times 10^6$ g/(molZr·h), respectively, even under the conditions of Examples 9 and 10 of a lower polymerization temperature (90-115°C) and a lower pressure (1.1 MPa) than the above-mentioned literatures. These activities correspond to high activities (per hour) of 678 g/(molZr·h·atm) and 280 g/(molZr·h·atm), respectively. The polymerization was carried out for 10 minutes and 18 minutes, respectively, but at the time of termination of the polymerization, polymerization was proceeding without deactivation. Even from the yield of the polymer by unit pressure rather than the unit time, it is at least 113$\times 10^6$ g/(molZr·atm) or at least 84$\times 10^6$ g/(molZr·atm), respectively.

Namely, it is evident that the polymerization catalysts comprising the transition metal compounds of the present Examples and the cocatalysts, exhibit remarkably higher polymerization activities than the catalyst comprising rac-diisopropylaminoboranediylbis(1-indenyl)zirconium dichloride and methylalumoxane, as disclosed in the above-mentioned literatures Organometallics 1999, 18, 2288, and Organometallics 1999, 18, 1363.

EXAMPLE 11

Into an autoclave having a capacity of 1 ℓ and equipped with a stirrer, 300 mℓ of toluene was charged, and the internal temperature was raised to 70°C, followed by stirring. About 20 ℓ of nitrogen was used for bubbling to purge the interior of the system, and 8.4 mmol of triisobutylaluminum and 8.4 mmol, based on Al, of methylalumoxane (PMAO-3A, manufactured by TOSOH-AKZO K.K.) were added thereto. Then, the autoclave was cooled to -50°C by dryice-methanol, and 1.8 mol of propylene gas was introduced. From a pressure resistant tank installed above the autoclave, about 40 mℓ of a toluene solution containing 8.4 $\mu$mol of catalyst rac-diisopropylaminoboranebis(2-methyl-4,5-benz-1-indenyl)zirconium dichloride (catalyst D) and 0.84 mmol of triisobutyl aluminum, was introduced together with propylene gas. The dryice-methanol gas was removed, and the temperature was raised to 50°C over a period of about 15 minutes, followed by polymerization at 50°C for 2.5 hours. After termination, the pressure was gradually released, and the polymerization solution was gradually put into methanol to let a polymer precipitate. The precipitated polymer was collected by filtration and heated at 80°C for 8 hours in a vacuum drier to dry the polymer. 57.2 g of a powdery polymer was obtained.

The molecular weight of this polymer was measured by high temperature GPC, whereby the weight average molecular weight (Mw) was 81800, the number average molecular weight (Mn) was 33500, and Mw/Mn was 2.44.

Further, DSC was measured, whereby a melting point was observed at 145.7°C.

<u>Preparation of a complex</u>

rac-Phenylboranediylbis{1-(cyclopenta[1]phenanthryl)}zirconium dichloride, another name: rac-phenylbolylbis {1-(cyclopenta[1]phenanthryl)}zirconium dichloride, was prepared by the following method.

1H-cyclopenta[1]phenanthrene was prepared by a known method such as Organometallics, 16, 3413 (1997).

rac-Phenylboranediylbis{1-(cyclopenta[1]phenanthryl)}zirconium dichloride was prepared with reference to the synthesis of rac-phenylboranediylbis(1-indenyl)zirconium dichloride as disclosed in U.S.P. 5,962,718, by changing the

indene to be used, to 1H-cyclopenta[1]phenanthrene, and it was obtained as bright yellow fine crystals.

The obtained complex showed peaks at the following positions in 1H-NMR measured by using TSM as standard.

1HNMR(400 MHz, $CDCl_3$) δ 5.64 ppm (d, 2H), 7.37 ppm (d, 2H), 7.26-8.65 ppm (many peaks, 21H).

rac-Phenylboranediylbis{1-(cyclopenta[1]phenanthryl)}zirconium dichloride (another name: rac-phenylbolylbis{1-(cyclopenta[1]phenanthryl)}zirconium dichloride)

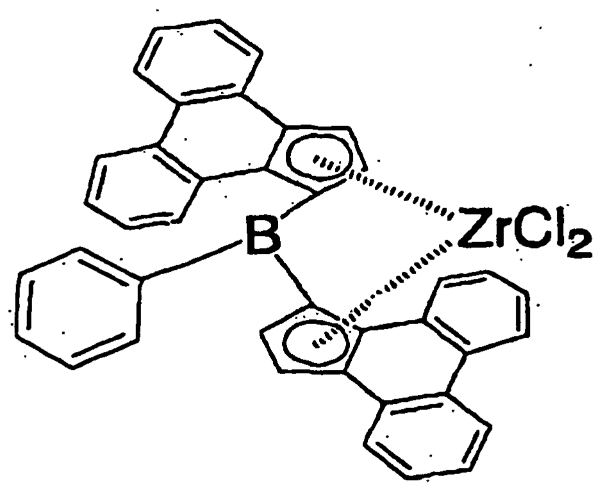

EXAMPLE 12 (preparation of an ethylene-styrene copolymer)

Polymerization was carried out by using an autoclave having a capacity of 10 ℓ and equipped with a stirrer and a jacket for heating and cooling.

4,000 mℓ of dehydrated toluene and 800 mℓ of dehydrated styrene were charged, and the internal temperature was raised to 50°C, followed by stirring. About 100 ℓ of nitrogen was used for bubbling to purge the interior of the system, and 8.4 mmol of triisobutylaluminum and 8.4 mmol, based on Al, of methylalumoxane (PMAO-3A, manufactured by TOSOH-AKZO K.K.) were added thereto. Ethylene was immediately introduced, and after the pressure was stabilized at 1.1 MPa (10 $kg/cm^2G$), 100 mℓ of a toluene solution having 2.1 μmol of rac-phenylboranediylbis{1-(cyclopenta[1]phenanthryl)}zirconium dichloride (catalyst D) and 0.84 mmol of triisobutyl aluminum dissolved, was added to the autoclave from a catalyst tank installed above the autoclave. During the polymerization, the internal temperature was maintained at 50°C and the pressure was maintained at 1.1 MPa. One hour later, the ethylene pressure was rapidly released, and the polymerization solution was discharged into a vessel containing methanol to terminate the polymerization, but as is evident from the consumption rate of ethylene (the consumption rate of ethylene during the polymerization was monitored by a mass flow controller), the polymerization was found to have proceeded without deactivation. The obtained polymerization solution was vigorously stirred and put into excess methanol in small portions to let the formed polymer precipitate. The product was dried under vacuum at 80°C until no further weight change was observed, to obtain 265 g of a polymer.

EXAMPLE 13 (preparation of an ethylene-octene copolymer)

Polymerization was carried out by using an autoclave having a capacity of 10 ℓ and equipped with a stirrer and a jacket for heating and cooling.

4,700 mℓ of dehydrated toluene and 100 mℓ of 1-octene were charged, and the internal temperature was raised to 50°C, followed by stirring. About 100 ℓ of nitrogen was used for bubbling to purge the interior of the system, and 8.4 mmol of triisobutylaluminum and 8.4 mmol, based on Al, of methylalumoxane (PMAO-3A, manufactured by TOSOH-AKZO K.K.) were added thereto. The internal temperature was immediately raised to 90°C, and ethylene was introduced. After the pressure was stabilized at 1.1 MPa (10 $kg/cm^2G$), 100 mℓ of a toluene solution having 1.0 μmol of rac-phenylboranediylbis{1-(cyclopenta[1]phenanthryl)}zirconium dichloride (catalyst D) and 0.84 mmol of triisobutyl aluminum dissolved, was added to the autoclave from a catalyst tank installed above the autoclave. During the polymerization, the internal temperature rose temporarily to 105°C by abrupt internal heat generation. Further, the ethylene pressure

decreased temporarily to 0.9 MPa by the abrupt polymerization. The polymerization was terminated after the polymerization time of 5 minutes, but from the consumption rate of ethylene (the consumption rate of ethylene during the polymerization was monitored by a mass flow controller), the polymerization was found to have proceeded without deactivation. By similar post treatment, 173 g of a polymer was obtained.

In Table 5, the yield of the polymer and the content of the co-monomer are shown, and in Table 6, the analytical values of the obtained polymer are shown.

Table 5

| Examples, Comparative Examples | Catalyst | Amount of catalyst (μmol) | MAO (mmol) | Amount of solvent (mℓ) | Amount of octene (mℓ) | Amount of styrene (mℓ) | Ethylene pressure (MPa) | Polymerization temperature (°C) | Polymerization time (min.) | Yield (g) | Activity (g/mol-catalyst-h)/ $10^6$ |
|---|---|---|---|---|---|---|---|---|---|---|---|
| Example 12 | D | 2.1 | P: 8.4 | T4000 | 800 | - | 1.1 | 50 | 60 | 265 | 126 |
| Example 13 | D | 1.0 | P: 8.4 | T4700 | - | 100 | 1.1-0.9 | 90-105 | 5 | 173 | 2076 |

T: Toluene, C: cyclohexane, -: No monomer used
Transition metal compound used in the catalyst
D: rac-phenylboranediylbis(1-(cyclopenta[1]phenanthryl))zirconium dichloride

Table 6

| Examples, Comparative Examples | 1-Octene content (mol%) | St content (mol%) | Mw/$10^4$ | Mw/Mn | Glass transition temperature (°C) | Melting point (°C) | MFR 200°C under a load of 5 kg for 10 minutes |
|---|---|---|---|---|---|---|---|
| Example 12 | 14.9 | - | * | * | -21 | 50, 124 | 2.2 |
| Example 13 | - | 1.7 | 18.7 | 3.4 | .-30 | 122 | Not measured |
| *: Measured by high temperature GPC, but the molecular weight could not be measured as the refractive indices of the solvent and the polymer were close to each other and the sensitivity by the RI detector was low. | | | | | | | |

When the transition metal compound of these Examples, rac-phenylboranediylbis{1-(cyclopenta[1]phenanthryl)}zirconium dichloride, another name: rac-phenylbolylbis{1-(cyclopenta[1]phenanthryl)}zirconium dichloride, is used as a catalyst component, it is possible to produce an ethylene-styrene copolymer or an ethylene-octene copolymer, with a remarkably high activity. Further, this activity is remarkably high as compared with the results shown in Comparative Examples 1 and 2 (the results of using rac-phenylboranediylbis(1-indenyl)zirconium dichloride as a transition metal compound).

Further, when copolymerization of ethylene-styrene is carried out by using the transition metal compound of these Examples as a catalyst component, it is possible to produce a copolymer having a high styrene content under the same polymerization conditions.

<u>INDUSTRIAL APPLICABILITY</u>

The polymerization catalyst comprising the transition metal catalyst component for polymerization, of the present invention, shows a very high polymerization activity and presents an olefin (co)polymer and an aromatic vinyl compound-olefin copolymer, with high efficiency, and it is industrially very useful.

**Claims**

**1.** A transition metal catalyst component for polymerization, represented by the following formula (1):

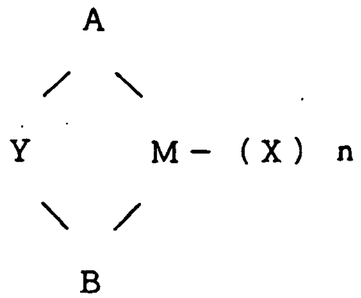

(1)

in the formula, A is an unsubstituted or substituted benzindenyl group which can be represented by the following formula (5), (6) or (7):

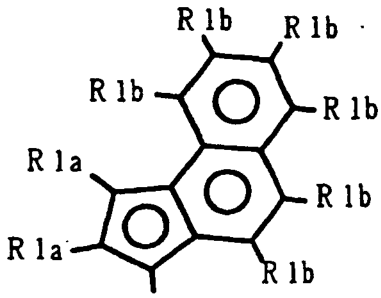

(5)

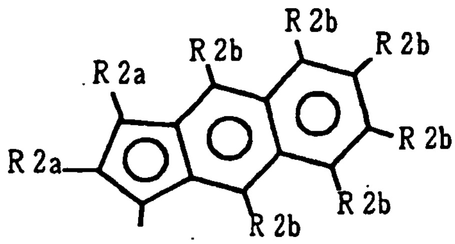

(6)

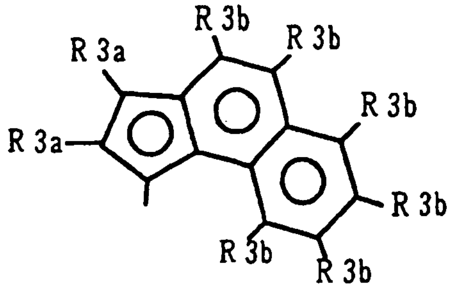

(7)

in the above formulae (5) to (7), each of R1a, R1b, R2a, R2b, R3a and R3b which are independent of each other, is hydrogen, a $C_{1-20}$ alkyl group, a $C_{6-10}$ aryl group or a $C_{7-20}$ alkylaryl group, they may contain from one to three halogen atoms, silicon atoms, phosphorus atoms, oxygen atoms, boron atoms, nitrogen atoms, sulfur atoms and/or selenium atoms, they may have a structure of an $OSiR_3$ group, a $SiR_3$ group, an $NR_2$ group, an OH group, an OR group or a $PR_2$ group (each R represents a $C_{1-10}$ hydrocarbon group), such a plurality of R1a, a plurality of R1b, a plurality of R2a, a plurality of R2b, a plurality of R3a or a plurality of R3b, may be the same or different from one another, and adjacent such substituents may together form a single or plural 5- to 8-membered aromatic or aliphatic rings;

B is the same unsubstituted or substituted benzindenyl group as described above, or an unsubstituted or substituted cyclopentadienyl group, an unsubstituted or substituted indenyl group, or an unsubstituted or substituted fluorenyl group, which can be represented by the following formula (8), (9) or (10):

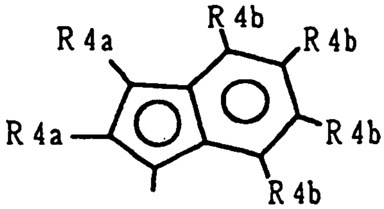

(8)

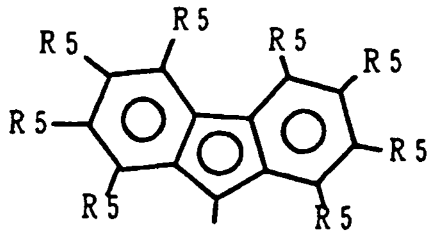

(9)

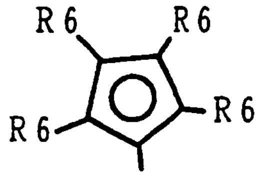

(10)

in the above formulae (8) to (10), each of R4a, R4b, R5 and R6 which are independent of each other, is hydrogen, a $C_{1-20}$ alkyl group, a $C_{6-10}$ aryl group or a $C_{7-20}$ alkylaryl group, they may contain from one to three halogen atoms, silicon atoms, phosphorus atoms, oxygen atoms, boron atoms, nitrogen atoms, sulfur atoms and/or selenium atoms, they may have a structure of an $OSiR_3$ group, a $SiR_3$ group, an $NR_2$ group, an OH group, an OR group or a $PR_2$ group (each R represents a $C_{1-10}$ hydrocarbon group), and such a plurality of R4a, a plurality of R4b, a plurality of R5 or a plurality of R6, may be the same or different from one another;
when both A and B are unsubstituted or substituted benzindenyl groups, both may be the same or different;
Y is a substituted boron group having bonds to A and B and having hydrogen or a $C_{1-20}$ hydrocarbon group, as a substituent, and the substituent in Y may contain from one to three nitrogen, boron, silicon, phosphorus, selenium, oxygen or sulfur atoms or may have a cyclic structure;
X is each independently hydrogen, halogen, a $C_{1-15}$ alkyl group, a $C_{3-15}$ alkenyl group, a $C_{6-10}$ aryl group, a $C_{8-12}$ alkylaryl group, a silyl group having a $C_{1-4}$ hydrocarbon substituent, a $C_{1-10}$ alkoxy group, or an amide or amino group having a $C_{1-22}$ hydrocarbon substituent, n is an integer of 0, 1 or 2, and when X is plural, the plurality of X may have bonds; and
M is zirconium, hafnium or titanium.

2. The transition metal catalyst component according to Claim 1, wherein in the above formulae (5) to (8), R1a, R2a, R3a and R4a are hydrogen.

3. The transition metal catalyst component according to Claim 1, wherein A is one selected from a 4,5-benz-1-indenyl group, a 5,6-benz-1-indenyl group, a 6,7-benz-1-indenyl group, an α-acenaphtho-1-indenyl group, a 3-cyclopenta [c]phenanthryl group or a 1-cyclopenta[1]phenanthryl group, and B is one selected from a 4,5-benz-1-indenyl group, a 5,6-benz-1-indenyl group, a 6,7-benz-1-indenyl group, an α-acenaphtho-1-indenyl group, a 3-cyclopenta[c]phenanthryl group, a 1-cyclopenta[1]phenanthryl group, a 1-indenyl group, a 4-phenylindenyl group or 4-naphthylindenyl group.

4. The transition metal catalyst component according to Claim 1, wherein in the above formulae (5) to (7), one of each R1a, R2a or R3a is a $C_{1-20}$ alkyl group, a $C_{6-10}$ aryl group or a $C_{7-20}$ alkylaryl group.

5. The transition metal catalyst component according to Claim 1, wherein A is a 2-methyl-4,5-benzindenyl group, a 1-(2-methylcyclopenta[l]phenanthryl) group or a 3-(2-methylcyclopenta[c]phenanthryl) group.

6. The transition metal catalyst component according to Claim 1, wherein Y is a boron substituent having an aromatic group as a substituent.

7. The transition metal catalyst component according to Claim 1, wherein Y is a phenylboranediyl group (a phenylboryl group).

8. The transition metal catalyst component according to Claim 1, wherein Y is a boron substituent having an amide group as a substituent.

**9.** The transition metal catalyst component according to Claim 1, wherein Y is a boron substituent having a diisopropylamino group (a diisopropylamide group) as a substituent.

**10.** The transition metal catalyst component according to Claim 1, wherein M is zirconium.

**11.** A polymerization catalyst comprising the transition metal catalyst component for polymerization as defined in any one of Claims 1 to 10 and a cocatalyst.

**12.** The polymerization catalyst according to Claim 11, wherein as the cocatalyst, an aluminoxane (or an alumoxane) represented by the following formula (2) or (3) is used, and, if necessary, an alkyl aluminum is used:

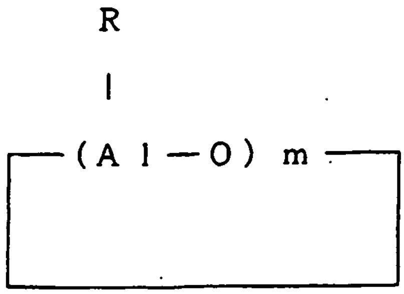

(2)

in the formula, R is a $C_{1-5}$ alkyl group, a $C_{6-10}$ aryl group or hydrogen, and m is an integer of from 2 to 100, provided that the plurality of R may be the same or different from one another;

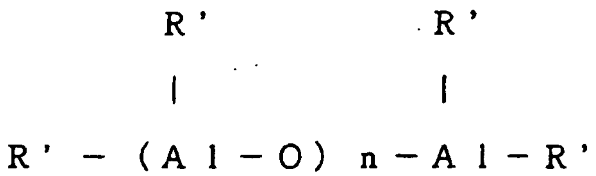

(3)

in the formula, R' is a $C_{1-5}$ alkyl group, a $C_{6-10}$ aryl group or hydrogen, and n is an integer of from 2 to 100, provided that the plurality of R' may be the same or different from one another.

**13.** The polymerization catalyst according to Claim 11, wherein as the cocatalyst, a boron compound and, if necessary, an alkyl aluminum, are used.

**14.** A method for producing an olefin polymer or copolymer, wherein polymerization is carried out by means of a polymerization catalyst comprising a transition metal catalyst component as defined in any one of Claims 1 to 10 and a cocatalyst.

**15.** A method for producing an olefin polymer or copolymer, wherein polymerization is carried out by means of a polymerization catalyst comprising a transition metal catalyst component as defined in Claim 4 or 5 and a cocatalyst.

**16.** A method for producing an aromatic vinyl compound-olefin copolymer, wherein polymerization is carried out by means of a polymerization catalyst comprising a transition metal catalyst component as defined in any one of Claims 1 to 10 and a cocatalyst.

**17.** A method for producing an aromatic vinyl compound-olefin copolymer, wherein polymerization is carried out by means of a polymerization catalyst comprising a transition metal catalyst component as defined in Claim 2 or 3 and a cocatalyst.

**18.** An olefin (co)polymer obtainable by the method as defined in Claim 14 or 15.

**19.** An aromatic vinyl compound-olefin copolymer obtainable by the method as defined in Claim 16 or 17.

**20.** An ethylene-α-olefin-aromatic vinyl compound copolymer or an ethylene-cyclic olefin-aromatic vinyl compound copolymer, obtainable by the method as defined in Claim 16 or 17.

**Patentansprüche**

**1.** Übergangsmetallkatalysator-Komponente zur Polymerisation, dargestellt durch die folgende Formel (1):

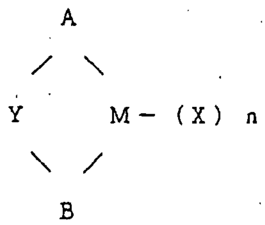

(1)

worin A eine unsubstituierte oder substituierte Benzindenylgruppe ist, die durch die folgende Formel (5), (6) oder (7) repräsentiert werden kann:

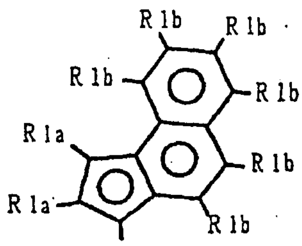

(5)

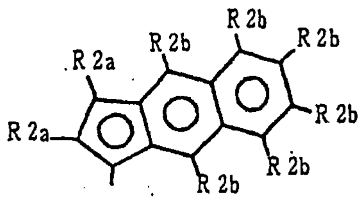

(6)

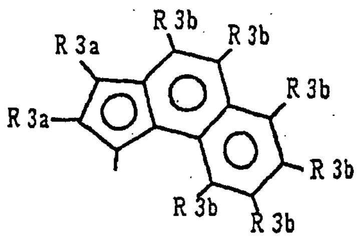

(7)

in den obigen Formeln (5) bis (7) jeder der Reste R1a, R1b, R2a, R2b, R3a und R3b, die unabhängig von einander sind, Wasserstoff, eine $C_{1-20}$-Alkylgruppe, eine $C_{6-10}$-Arylgruppe oder eine $C_{7-20}$-Alkylarylgruppe bedeutet, die ein bis drei Halogenatome, Siliciumatome, Phosphoratome, Sauerstoffatome, Boratome, Stickstoffatome, Schwefelatome und/oder Selenatome enthalten können, die Struktur einer $OSiR_3$-Gruppe, einer $SiR_3$-Gruppe, einer $NR_2$-Gruppe, einer OH-Gruppe, einer OR-Gruppe oder einer $PR_2$-Gruppe (worin jedes R eine $C_{1-10}$-Kohlenwasserstoffgruppe bedeutet) aufweisen können, die Mehrzahl von R1a, die Mehrzahl von R1b, die Mehrzahl von R2a, die Mehrzahl

von R2b, die Mehrzahl von R3a oder die Mehrzahl von R3b gleich oder verschieden von einander sein kann, und benachbarte solche Substituenten einen einzelnen oder mehrere 5- bis 8-gliedrige aromatische oder aliphatische Ringe bilden können;
B die gleiche unsubstituierte oder substituierte Benzindenylgruppe wie vorestehend beschrieben ist, oder eine unsubstituierte oder substituierte Cyclopentadienylgruppe, eine unsubstituierte oder substituierte Indenylgruppe, oder eine unsubstituierte oder substituierte Fluorenylgruppe, die durch die folgende Formel (8), (9) oder (10) repräsentiert sein kann:

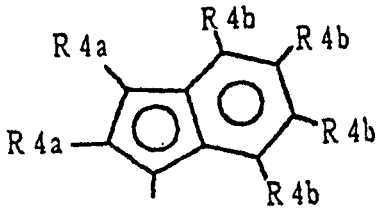

(8)

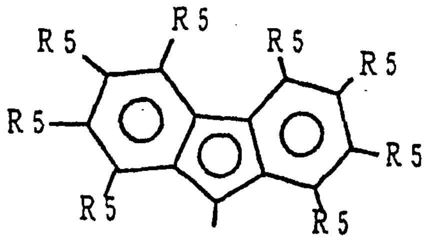

(9)

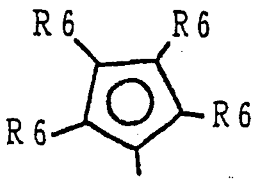

(10)

in den obigen Formeln (8) bis (10) jeder der Reste R4a, R4b, R5 und R6, die unabhängig von einander sind, Wasserstoff, eine $C_{1-20}$-Alkylgruppe, eine $C_{6-10}$-Arylgruppe oder eine $C_{7-20}$-Alkylarylgruppe bedeutet, die ein bis drei Halogenatome, Siliciumatome, Phosphoratome, Sauerstoffatome, Boratome, Stickstoffatome, Schwefelatome und/oder Selenatome enthalten können, die Struktur einer $OSiR_3$-Gruppe, einer $SiR_3$-Gruppe, einer $NR_2$-Gruppe, einer OH-Gruppe, einer OR-Gruppe oder einer $PR_2$-Gruppe (wobei jedes R eine $C_{1-10}$-Kohlenwasserstoffgruppe bedeutet) aufweisen können, und die Mehrzahl von R4a, eine Mehrzahl von R4b, eine Mehrzahl von R5 oder eine Mehrzahl von R6 gleich oder verschieden von einander sein kann;
wenn A und B beide unsubstituierte oder substituierte Benzindenylgruppen sind, beide gleich oder verschieden sein können;
Y eine substituierte Borgruppe mit Bindungen zu A und B und mit Wasserstoff oder einer $C_{1-20}$-Kohlenwasserstoffgruppe als Substituent ist, und der Substituent in Y ein bis drei Stickstoff-, Bor-, Silicium-, Phosphor-, Selen-, Sauerstoff- oder Schwefelatome enthalten kann oder eine cyclische Struktur aufweisen kann;
X unabhängig von einander Wasserstoff, Halogen, eine $C_{1-15}$-Alkylgruppe, eine $C_{3-15}$-Alkenylgruppe, eine $C_{6-10}$-Arylgruppe, eine $C_{8-12}$-Alkylarylgruppe, eine Silylgruppe mit einem $C_{1-4}$-Kohlenwasserstoff-Substituent, eine $C_{1-10}$-Alkoxygruppe oder eine Amid- oder Aminogruppe mit einem $C_{1-22}$-Kohlenwasserstoff-Substituent, n eine ganze Zahl von 0, 1 oder 2 ist, und wenn X eine Mehrzahl ist, die Mehrzahl von X Bindungen aufweisen kann; und M Zirkonium, Hafnium oder Titan ist.

**2.** Übergangsmetallkatalysator-Komponente nach Anspruch 1, worin in den obigen Formeln (5) bis (8) R1a, R2a, R3a und R4a Wasserstoff sind.

**3.** Übergangsmetallkatalysator-Komponente nach Anspruch 1, worin A ausgewählt ist aus einer 4,5-Benz-1-indenylgruppe, einer 5,6-Benz-1-indenylgruppe, einer 6,7-Benz-1-indenylgruppe, einer α-Acenaphtho-1-indenylgruppe, einer 3-Cyclopenta[c]phenanthrylgruppe oder einer 1-Cyclopenta[1]phenanthrylgruppe; und B ausgewählt ist aus einer 4,5-Benz-1-indenylgruppe, einer 5,6-Benz-1-indenylgruppe, einer 6,7-Benz-1-indenylgruppe, α-Acenaphtho-1-indenylgruppe, einer 3-Cyclopenta[c]phenanthrylgruppe, einer 1-Cyclopenta[1]phenanthrylgruppe, einer 1-Indenylgruppe, einer 4-Phenylindenylgruppe oder einer 4-Naphthylindenylgruppe.

**4.** Übergangsmetallkatalysator-Komponente nach Anspruch 1, worin in den obigen Formeln (5) bis (7) einer jeder der Reste R1a, R2a oder R3a eine $C_{1-20}$-Alkylgruppe, eine $C_{6-10}$-Arylgruppe oder eine $C_{7-30}$-Alkylarylgruppe ist.

**5.** Übergangsmetallkatalysator-Komponente nach Anspruch 1, worin A eine 2-Methyl-4,5-benzindenylgruppe, eine 1-(2-Methylcyclopenta[1]phenanthryl)gruppe oder eine 3-(2-Methylcyclopenta[c]phenanthryl)gruppe ist.

**6.** Übergangsmetallkatalysator-Komponente nach Anspruch 1, worin Y ein Bor-Substituent ist, der eine aromatische Gruppe als Substituent aufweist.

**7.** Übergangsmetallkatalysator-Komponente nach Anspruch 1, worin Y eine Phenylborandiylgruppe (eine Phenylborylgruppe) ist.

**8.** Übergangsmetallkatalysator-Komponente nach Anspruch 1, worin Y ein Bor-Substituent ist, der eine Amidgruppe als Substituenten aufweist.

**9.** Übergangsmetallkatalysator-Komponente nach Anspruch 1, worin Y ein Bor-Substituent ist, der eine Diisopropylaminogruppe (eine Diisopropylamidgruppe) als Substituenten aufweist.

**10.** Übergangsmetallkatalysator-Komponente nach Anspruch 1, worin M Zirconium ist.

**11.** Polymerisationskatalysator, umfassend die in einem der Ansprüche 1 bis 10 definierte Übergangsmetallkatalysator-Komponente zur Polymerisation und einen Co-Katalysator.

**12.** Polymerisationskatalysator nach Anspruch 11, worin als Co-Katalysator ein Aluminoxan (oder ein Alumoxan) der folgenden Formel (2) oder (3) verwendet wird, und, wenn erforderlich, ein Alkylaluminium verwendet wird:

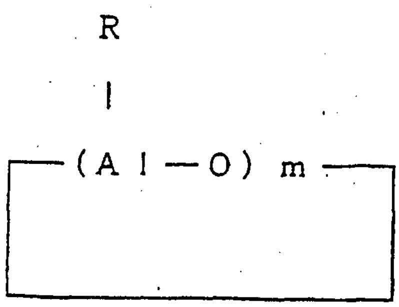

(2)

worin in der Formel R eine $C_{1-5}$-Alkylgruppe, eine $C_{6-10}$-Arylgruppe oder Wasserstoff ist, und m eine ganze Zahl von 2 bis 100 ist, mit der Voraussetzung, dass die Mehrzahl der Reste R gleich oder verschieden von einander sein kann.

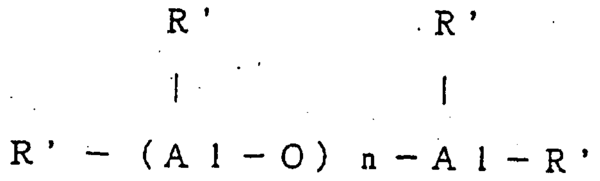

(3)

worin in der Formel R' eine $C_{1-5}$-Alkylgruppe, eine $C_{6-10}$-Arylgruppe oder Wasserstoff bedeutet, und n eine ganze

Zahl von 2 bis 100 ist, mit der Voraussetzung, dass die Mehrzahl der Reste R' gleich oder verschieden von einander sein kann.

**13.** Polymerisationskatalysator nach Anspruch 11, worin als Co-Katalysator eine Borverbindung und, wenn erforderlich, ein Alkylaluminium verwendet werden.

**14.** Verfahren zur Herstellung eines Olefinpolymers oder -Copolymers, worin die Polymerisation mittels eines Polymerisationskatalysators durchgeführt wird, der eine in einem der Ansprüche 1 bis 10 definierte Übergangsmetallkatalysator-Komponente und einen Co-Katalysator umfasst.

**15.** Verfahren zur Herstellung eines Olefinpolymers oder -Copolymers, worin die Polymerisation mittels eines Polymerisationskatalysators durchgeführt wird, der eine in Anspruch 4 oder 5 definierte Übergangsmetallkatalysator-Komponente und einen Co-Katalysator umfasst.

**16.** Verfahren zur Herstellung eines aromatische Vinylverbindung/Olefin-Copolymers, worin die Polymerisation mittels eines Polymerisationskatalysators durchgeführt wird, der eine in einem der Ansprüche 1 bis 10 definierte Übergangsmetallkatalysator-Komponente und einen Co-Katalysator umfasst.

**17.** Verfahren zur Herstellung eines aromatische Vinylverbindung/Olefin-Copolymers, worin die Polymerisation mittels eines Polymerisationskatalysators durchgeführt wird, der eine in Anspruch 2 oder 3 definierte Übergangsmetallkatalysator-Komponente und einen Co-Katalysator umfasst.

**18.** Olefin-(Co)polymer, erhältlich nach dem in Anspruch 14 oder 15 definierten Verfahren.

**19.** Aromatische Vinylverbindung/Olefin-Copolymer, erhältlich nach dem in Anspruch 16 oder 17 definierten Verfahren.

**20.** Ethylen/α-Olefin/aromatische Vinylverbindung-Copolymer oder Ethylen/cyclisches Olefin/aromatische Vinylverbindung-Copolymer, erhältlich nach dem in Anspruch 16 oder 17 definierten Verfahren.

## Revendications

**1.** Composant catalyseur à métal de transition pour polymérisation, représenté par la formule (1) suivante :

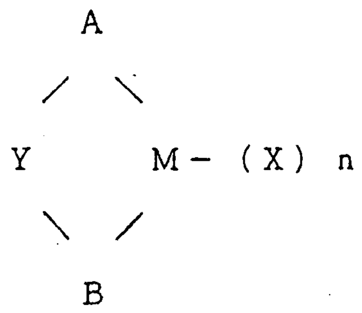

(1)

dans la formule, A est un groupe benzindényle non substitué ou substitué qui peut être représenté par la formule (5), (6) ou (7) suivante :

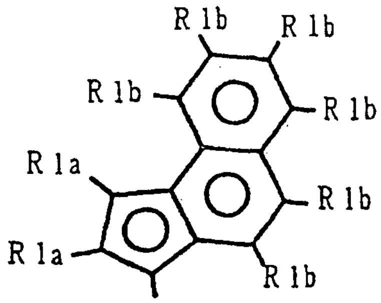

(5)

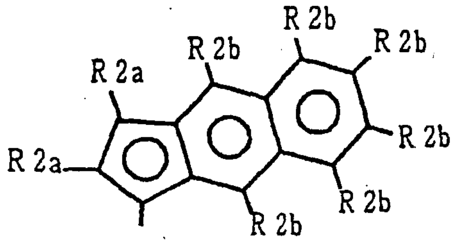

(6)

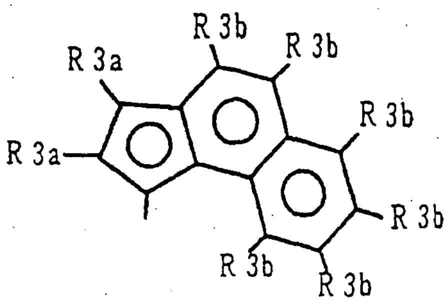

(7)

dans les formules (5) à (7) ci-dessus, chacun de R1a, R1b, R2a, R2b, R3a et R3b, qui sont indépendants les uns des autres, est hydrogène, un groupe alkyle en $C_{1-20}$, un groupe aryle en $C_{6-10}$ ou un groupe alkylaryle en $C_{7-20}$, ils peuvent contenir de un à trois atomes d'halogène, atomes de silicium, atomes de phosphore, atomes d'oxygène, atomes de bore, atome d'azote, atomes de soufre et/ou atomes de sélénium, ils peuvent avoir la structure d'un groupe $OSiR_3$, d'un groupe $SiR_3$, d'un groupe $NR_2$, d'un groupe OH, d'un groupe OR ou d'un groupe $PR_2$ (chaque R représente un groupe hydrocarboné en $C_{1-10}$), de telles pluralité de R1a, pluralité de R1b, pluralité de R2a, pluralité de R2b, pluralité de R3a et pluralité de R3b, peuvent être identiques ou différents les unes des autres, et de tels substituants adjacents peuvent former un ou des cycles aliphatiques ou aromatiques à 5 à 8 chaînons;
B est le même groupe benzindényle non substitué ou substitué que celui décrit ci-dessus, ou un groupe cyclopentadiényle non substitué ou substitué, un groupe indényle non substitué ou substitué, ou un groupe fluorényle non substitué ou substitué, qui peut être représenté par la formule (8), (9) ou (10) suivante :

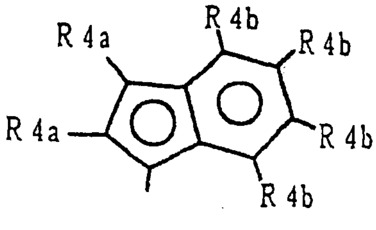

(8)

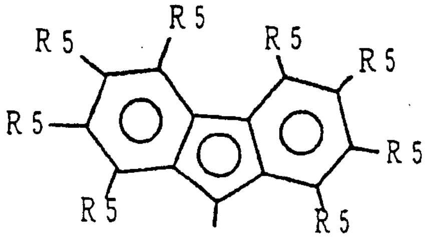

(9)

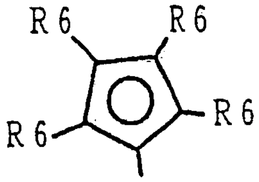

(10)

dans les formules (8) à (10) ci-dessus, chacun de R4a, R4b, R5 et R6, qui sont indépendants les uns des autres, est hydrogène, un groupe alkyle en $C_{1-20}$, un groupe aryle en $C_{6-10}$ ou un groupe alkylaryle en $C_{7-20}$, ils peuvent contenir de un à trois atomes d'halogène, atomes de silicium, atomes de phosphore, atomes d'oxygène, atomes de bore, atome d'azote, atomes de soufre et/ou atomes de sélénium, ils peuvent avoir la structure d'un groupe $OSiR_3$, d'un groupe $SiR_3$, d'un groupe $NR_2$, d'un groupe OH, d'un groupe OR ou d'un groupe $PR_2$ (chaque R représente un groupe hydrocarboné en $C_{1-10}$), et de telles pluralité de R4a, pluralité de R4b, pluralité de R5 et pluralité de R6 peuvent être identiques ou différents les unes des autres ;
quand à la fois A et B sont des groupes benzindényle non substitués ou substitués, les deux peuvent être identiques ou différents ;
Y est un groupe de bore substitué ayant des liaisons avec A et B et ayant un hydrogène ou un groupe hydrocarboné en $C_{1-20}$, en tant que substituant, et le substituant dans Y peut contenir de un à trois atomes d'azote, de bore, de silicium, de phosphore, de sélénium, d'oxygène ou de soufre ou peut avoir une structure cyclique ;
X est chacun indépendamment hydrogène, halogène, un groupe alkyle en $C_{1-15}$, un groupe alcényle en $C_{3-15}$, un groupe aryle en $C_{6-10}$, un groupe alkylaryle en $C_{8-12}$, un groupe silyle ayant un substituant hydrocarboné en $C_{1-4}$, un groupe alkoxy en $C_{1-10}$, ou un groupe amide ou amino ayant un substituant hydrocarboné en $C_{1-22}$, n est l'entier 0, 1 ou 2, et quand il y a plusieurs X, ces derniers peuvent avoir des liaisons ; et
M est zirconium, hafnium ou titane.

**2.** Composant catalyseur à métal de transition selon la revendication 1, dans lequel dans les formules (5) à (8) ci-dessus, R1a, R2a, R3a et R4a sont hydrogène.

**3.** Composant catalyseur à métal de transition selon la revendication 1, dans lequel A est choisi parmi un groupe 4,5-benz-1-indényle, un groupe 5,6-benz-1-indényle, un groupe 6,7-benz-1-indényle, un groupe α-acénaphto-1-indényle, un groupe 3-cyclopenta[c]phênanthryle et un groupe 1-cyclopenta[1]phénanthryle, et B est celui choisi parmi un groupe 4,5-benz-1-indényle, un groupe 5,6-benz-1-indényle, un groupe 6,7-benz-1-indényle, un groupe α-acénaphto-1-indényle, un groupe 3-cyclopenta[c]phénanthryle, un groupe 1-cyclopenta[1]phénanthryle, un groupe 1-indényle, un groupe 4-phénylindényle et un groupe 4-naphtylindényle.

**4.** Composant catalyseur à métal de transition selon la revendication 1, dans lequel dans les formules (5) à (7) ci-dessus, l'un de chaque R1a, R2a ou R3a est un groupe alkyle en $C_{1-20}$, un groupe aryle en $C_{6-10}$ ou un groupe alkylaryle en $C_{7-20}$.

**5.** Composant catalyseur à métal de transition selon la revendication 1, dans lequel A est un groupe 2-méthyl-4,5-benzindényle, un groupe 1-(2-méthylcyclopenta[1)phénanthryle) ou un groupe 3-(2-méthylcyclopenta[c]phénanthryle).

**6.** Composant catalyseur à métal de transition selon la revendication 1, dans lequel Y est un substituant de bore ayant un groupe aromatique en tant que substituant.

7. Composant catalyseur à métal de transition selon la revendication 1, dans lequel Y est un groupe phénylboranediyle (un groupe phénylboryle).

8. Composant catalyseur à métal de transition selon la revendication 1, dans lequel Y est un substituant de bore ayant un groupe amide en tant que substituant.

9. Composant catalyseur à métal de transition selon la revendication 1, dans lequel Y est un substituant de bore ayant un groupe diisopropylamino (un groupe diisopropylamide) en tant que substituant.

10. Composant catalyseur à métal de transition selon la revendication 1, dans lequel M est zirconium.

11. Catalyseur de polymérisation comprenant le composant catalyseur à métal de transition pour polymérisation tel que défini dans l'une quelconque des revendications 1 à 10 et un co-catalyseur.

12. Catalyseur de polymérisation selon la revendication 11, dans lequel en tant que co-catalyseur on utilise un aluminoxane (ou un alumoxane) représenté par la formule (2) ou (3) suivante, et, si nécessaire, on utilise un alkylaluminium :

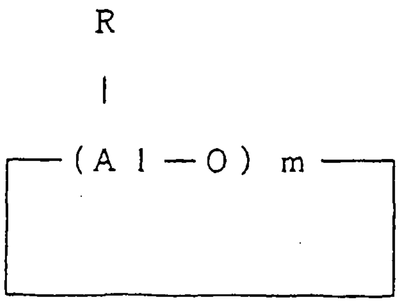

(2)

dans la formule, R est un groupe alkyle en $C_{1-5}$, un groupe aryle en $C_{6-10}$ ou hydrogène, et m est un entier de 2 à 100, avec la réserve que les R peuvent être identiques ou différents les uns des autres ;

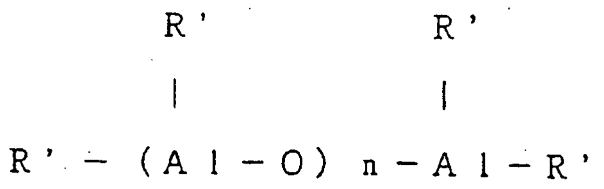

(3)

dans la formule, R' est un groupe alkyle en $C_{1-5}$, un groupe aryle en $C_{6-10}$ ou hydrogène, et n est un entier de 2 à 100, avec la réserve que les R' peuvent être identiques ou différents les uns des autres.

13. Catalyseur de polymérisation selon a revendication 11, dans lequel en tant que co-catalyseur on utilise un composé de bore et, si nécessaire, un alkylaluminium.

14. Procédé de production d'un polymère d'oléfine ou d'un copolymère d'oléfines, dans lequel la polymérisation est effectuée au moyen d'un catalyseur de polymérisation comprenant un composant catalyseur à métal de transition tel que défini dans l'une quelconque des revendications 1 à 10 et un co-catalyseur.

15. Procédé de production d'un polymère d'oléfine ou d'un copolymère d'oléfines, dans lequel la polymérisation est effectuée au moyen d'un catalyseur de polymérisation comprenant un composant catalyseur à métal de transition tel que défini dans la revendication 4 ou 5 et un co-catalyseur.

16. Procédé de production d'un copolymère de composé vinylique aromatique-oléfine, dans lequel la polymérisation est effectuée au moyen d'un catalyseur de polymérisation comprenant un composant catalyseur à métal de transition

tel que défini dans l'une quelconque des revendications 1 à 10 et un co-catalyseur

**17.** Procédé de production d'un copolymère de composé vinylique aromatique-oléfine, dans lequel la polymérisation est effectuée au moyen d'un catalyseur de polymérisation comprenant un composant catalyseur à métal de transition tel que défini dans la revendication 2 ou 3 et un co-catalyseur.

**18.** (Co)polymère d'oléfine(s) pouvant être obtenu par le procédé tel que défini dans la revendication 14 ou 15.

**19.** Copolymère de composé vinylique aromatique-oléfine pouvant être obtenu par le procédé tel que défini dans la revendication 16 ou 17.

**20.** Copolymère d'éthylène-$\alpha$-oléfine-composé vinylique aromatique ou copolymère d'éthylène-oléfine cyclique-composé vinylique aromatique, pouvant être obtenu par le procédé tel que défini dans la revendication 16 ou 17.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9715581 A
- JP 3163088 A
- JP 7053618 A
- JP 6049132 A
- JP 9309925 A
- JP 11130808 A
- WO 0037517 A
- US 5962718 A

### Non-patent literature cited in the description

- *J. Organomet. Chem.,* 1997, 536-537361
- *Polymer Preprints,* 1993, vol. 42, 2292
- *Organometallics,* 1999, vol. 18, 2288
- *Organometallics,* 1999, vol. 18, 1363
- *Organometallics,* 1997, vol. 16, 3413